# EUROPEAN PATENT SPECIFICATION

(11) **EP 2 852 892 B1**
(45) Date of publication and mention of the grant of the patent: **22.04.2020**
(21) Application number: 13720518.3
(22) Date of filing: 01.05.2013
(51) Int. Cl.: H04W 16/04, H04W 36/22, H04W 84/04

(54) **MOBILE TELECOMMUNICATIONS NETWORK AND METHOD OF OPERATING A MOBILE TELECOMMUNICATIONS NETWORK**
MOBILES TELEKOMMUNIKATIONSNETZWERK UND VERFAHREN ZUM BETREIBEN EINES MOBILEN TELEKOMMUNIKATIONSNETZWERKES
RÉSEAU DE TÉLÉCOMMUNICATION MOBILE ET PROCÉDÉ DE MISE EN OEUVRE D'UN RÉSEAU DE TÉLÉCOMMUNICATION

(30) Priority: 21.05.2012 GB 201208877
(43) Date of publication of application: 01.04.2015
(73) Proprietor: Vodafone IP Licensing Limited, Newbury, Berkshire RG14 2FN (GB)
(72) Inventor: COSIMINI, Peter, Newbury Berkshire RG14 2FN (GB); BURGER, Michel, Newbury Berkshire RG14 2FN (GB); JAVAID, Usman, Newbury Berkshire RG14 2FN (GB)
(74) Representative: Boult Wade Tennant LLP
(86) International application number: PCT/GB2013/051132
(87) International publication number: WO 2013/175170

(56) References cited:
- EP-A1- 2 403 186
- WO-A1-2011/149532
- US-A1- 2011 185 063
- CHINA MOBILE RESEARCH INSTITUTE: "C-RAN, The Road Towards Green RAN", INTERNET CITATION, October 2011 (2011-10), pages 1-44, XP002700746, Retrieved from the Internet: URL:http://labs.chinamobile.com/cran/wp-co ntent/uploads/CRAN_white_paper_v2_5_EN(1). pdf [retrieved on 2013-07-10]

## Description

### Field of the Invention

The present invention relates to a mobile telecommunications network including a core and a radio access network having radio means for wireless communication with mobile terminals registered with the network, and to a method of operating such a mobile telecommunications network.

### Background

Recently, a dramatic rise in sales of both smart-phones and laptop data cards has resulted in a substantial increase in the amount of data communications passing through mobile telecommunications networks. This volumetric increase can also be attributed to enhancements made to the capabilities of the networks. In fact it has been reported that mobile data growth grew 30 percent over the course of the second quarter of 2009. The most popular use for mobile data was HTTP browsing, although usage of HTTP streaming is growing considerably. Other mobile data uses include HTTP downloading and Peer-to-Peer (P2P) activities such as file sharing.

This ability to use the cellular networks for mobile data services, such as Internet browsing is resulting in subscribers treating their mobile networks in much the same way as they treat their fixed networks. That is, users are tending to expect the same service from the Internet, irrespective of their access method. However, mobile networks have a more restricted capacity and are more costly to operate, as compared to fixed networks.

In this regard, from the network operator's viewpoint, as the mobile broadband traffic volume carried over 2G, 3G and HSPA (High Speed Packet Access) networks continues to grow, the cost of supporting this data volume is becoming more and more expensive based on the current network architecture and deployments. In fact, access and data volumes are likely to rise faster than the revenue used to build and maintain the networks. This cost differential is exacerbated by one of the current business models being utilised, whereby operators charge a flat rate for unlimited amounts of data.

The increased usage is also unfortunately likely to result in an increase of data traffic jams, and hence a degradation of service for mobile users if not properly managed.

It has been proposed to control data-heavy users by "choking" the bandwidth available to them when a maximum data volume limit is exceeded. Whilst this addresses the problem on an individual level, it does not address the network capacity problem as a whole.

It is therefore apparent that mobile broadband is at a crossroads as networks and business models are strained by bandwidth demand that is unmatched by revenue generation.

These problems will only get worse with moves to position mobile data as a replacement for fixed DSL (Digital Subscriber Line) access and with the advent of higher radio access speeds with the proposed 4G LTE/SAE (Long Term Evolution/System Architecture Evolution) network. A large percentage of this traffic will consist of data which is destined for the public Internet, a significant proportion of which mobile operators will not be able to add value to, despite carrying the data on their own backhaul transport, core transport or cellular core infrastructure.

In addition to the problems discussed above, conventional mobile telephone communications networks have architectures that are hierarchical and expensive to scale. Many of the network elements, such as the BTS, routers, BSC/RNC etc are proprietary: devices of one manufacturer often do not interface with devices from another manufacturer. This makes it difficult to introduce new capabilities into the network as a different interface will be required for devices from each manufacturer. Further, conventional base stations are not capable of intelligent local routing or processing. Furthermore, the capacity of existing networks is not always used effectively. For example, many cell sites are under used, whilst others are heavily used.

The current network architecture has the following disadvantages:-
- Hierarchical and expensive to scale
- Backhaul is a major problem
- Proprietary platforms: BTS, BSC/RNC, SGSN etc
- Closed nodes and interfaces
- Very limited application or customer awareness (except for QoS priority)
- No intelligent local routing or processing
- Inefficient use of installed capacity

Document EP 2 403 186 A1 discloses a mobile telecommunications network which includes a core and radio access network, wherein the radio access network includes control means operable to control the use of network resources by mobile terminals. The control means may assess whether to use pooled resources from a centralised baseband pool.

Document China Mobile Research Institute: "C-RAN, The Road Towards Green RAN", White Paper, Version 2.5, October 2011, Internet URL: http://labs.chinamobile.com/ cran/wp-content/uploads/CRAN_white_paper_v2_5_EN(1).pdf, discloses a centralized base-band pool processing in the context of co-operative radio with distributed antenna equipped by Remote Radio Head and real-time cloud infrastructures RAN.

There is therefore a need to overcome or ameliorate at least one of the problems of the prior art. In particular there is a need to address the needs of both the network operators and the users in improving the provision of mobile broadband data services.

### Summary of the Invention

The invention is defined by independent claims 1 and 6. In the following, parts of the description and drawings referring to embodiments which are not covered by the claims are not presented as embodiments of the invention, but as examples useful for understanding the invention.

In one aspect the present invention provides a mobile telecommunications network including a core and a radio access network having a plurality of radio units for wireless communication with mobile terminals registered with the mobile telecommunications network as according to claim 1.

The network controller includes means operable to determine a portion of the resource capabilities of each of the control units that is surplus to the requirements of the radio unit(s) associated therewith and for making that portion of the resources available in the pool of resources. The portion of the resource capabilities of each of the control units that is surplus to the requirements of the radio unit(s) may be signalled from the control unit to the controller to enable the controller to determine the portion that is surplus to requirements.

The network controller may include means operable to receive requests for resources from a plurality of the resource consuming entities and to allocate to each of the resource consuming entities a part of the resources available in the pool of resources.

The resource consuming entities comprise a service provider and a service end user of a service provided by the service provider.

At least one of the service end users entities may be one of the mobile terminals registered with the mobile telecommunications network.

The controller may be operable to allocate to one of the service providers a part of the resources available in the pool of resources in dependence upon the location of at least one of the end users of the service provided by the service provider and the or each control unit providing said part of the resources in the pool. In this way, for example, the control units may be selected so that they are geographically close to the end users in order to reduce latency in communications.

The controller may allocate to one of the service providers a part of the resources available in the pool of resources, which part comprises resource capabilities of one or more of the control units, and the controller may subsequently change the ones of the control units which provides the part of the resources. This may be advantageous if one of the control units malfunctions or ceases to have resources that are surplus to requirements.

In another aspect the present invention provides a method of operating a mobile telecommunications network as defined in independent claim 6.

### Brief Description of the Drawings

An embodiment of the present invention will now be described in more detail with reference to the accompanying Figures in which:
Figure 1 illustrates a high level packet data network architecture, useful for explaining the prior art and embodiments of the present invention;
Figure 2 illustrates the introduction of a new functional "platform" in a 3G network;
Figure 3 illustrates a flow chart of an example offload decision process as implemented in the 3G network of Figure 2
Figure 4 illustrates a flow chart of an example offload decision making process that may be implemented by a redirection module
Figure 5 shows the novel "platform" in more detail provided in the Radio Access Network in accordance with an embodiment of the invention;
Figure 6 shows possible locations of the platform within a mobile telecommunications network;
Figure 7 is a flow chart showing the steps performed when a mobile terminal is activated;
Figure 8 shows the optimisation of content delivery to a mobile terminal;
Figure 9 shows a further optimisation of content delivery to a mobile terminal;
Figure 10 is a flow chart showing the procedures performed when a mobile terminal moves within the network;
Figure 11 shows the transfer of information between platforms;
Figure 12 shows the system architecture of an embodiment of the invention in which an "edge cloud" is provided;
Figure 13 shows the functional architecture corresponding to the system architecture of Figure 12;
Figure 14 is a flow chart showing the creation of the service for a service provider using services from an edge cloud; and
Figure 15 is a flow chart showing the provision of service to an end user (service consumption) by the service provider.

### Detailed Description

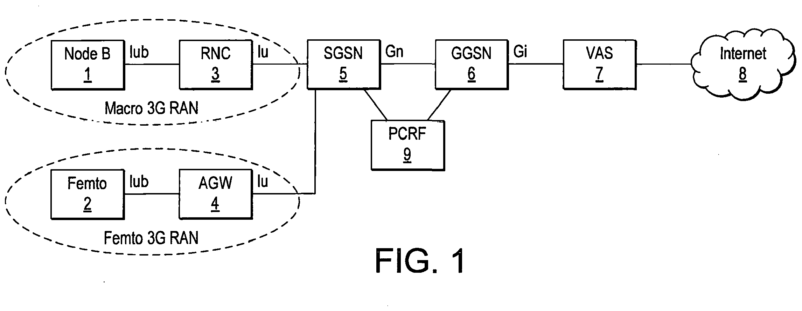

Key elements of a 3G mobile telecommunications network, and its operation, will now briefly be described with reference to Figure 1.

Each base station (e.g. Node B 1 and Femto 2) corresponds to a respective cell of the cellular or mobile telecommunications network and receives calls from and transmits calls to a mobile terminal (not shown) in that cell by wireless radio communication in one or both of the circuit switched or packet switched domains. The mobile terminal may be any portable telecommunications device, including a handheld mobile telephone, a personal digital assistant (PDA) or a laptop computer equipped with a network access datacard.

The nodeB 1 or Femto 2 can be considered to comprise two main parts: a radio frequency part (radio unit) and a baseband part. The radio frequency part handles the transmission of radio frequency signals between the antenna of the nodeB 1 or Femto 2 and the mobile terminal, and for converting radio frequency signals into digital baseband signals (and vice versa). The baseband part is responsible for controlling and managing the transmission of the baseband signals to other components of the mobile telecommunications network.

In a macro 3G network, the Radio Access Network (RAN) comprises Node Bs and Radio Network Controllers (RNCs). The Node B is the function within the 3G network that provides the physical and transport radio link between the mobile terminal (User Equipment, UE) and the network. The Node B performs the transmission and reception of data wirelessly across the radio interface, and also applies the codes that are necessary to describe channels in a CDMA system. The RNC is responsible for control the Node Bs that are connected to it. The RNC performs Radio Resource Management (RRM), some of the mobility management functions and is the point where encryption is done before user data is sent to and from a mobile terminal. The RNC connects to the Circuit Switched Core Network through a Media Gateway (MGW) and to an SGSN (Serving GPRS Support Node) 5 in the Packet Switched Core Network. In Figure 1, Node B 1 is controlled by RNC 3 across the Iub interface. An RNC may control more than one node B.

Figure 1 also illustrates a Femto 3G RAN, with Femto 2 operating as the base station. Femto 2 is connected to an Access Gateway (AGW) (a.k.a Concentrator) 4 via an Iuh interface. Femto is an abbreviation of "femto-cells", and many other different names have been used, including home access points (HAPs), access points (APs) and femto-base stations, but all names refer to the same apparatus.

The radio link between the Femto 2 and the mobile terminal uses the same cellular telecommunication transport protocols as Node B 1 but with a smaller range - for example 25m. The Femto 2 appears to the mobile terminal as a conventional base station, so no modification to the mobile terminal is required for it to operate with the Femto 2. The Femto 2 performs a role corresponding to that of Node B 1 in the macro 3G RAN.

The Femto 2 would typically be configured to serve a Wireless Local Area Network (WLAN) located in a home or office, in addition to GSM/UMTS/LTE networks. The WLAN could belong to the subscriber of the mobile terminal, or be an independently operated WLAN. The owner of Femto 2 can prescribe whether it is open or closed, whereby an open AP is able to carry communications from any mobile device in the GSM/UMTS/LTE network, and a closed AP is only able to carry communications from specific pre-assigned mobile devices.

Conventionally, in a 3G network (macro or Femto), the RANs are controlled by a mobile switching centre (MSC) and an SGSN (Serving GPRS Support Node) 5 of the core network. The MSC supports communications in the circuit switched domain, whilst the SGSN 5 supports communications in the packet switched domain - such as GPRS data transmissions. The SGSN is responsible for the delivery of data packets from and to the mobile terminals within its geographical service area. It performs packet routing and transfer, mobility management (attach/detach and location management), logical link management, and authentication and charging functions. A location register of the SGSN stores location information (e.g., current cell, current VLR) and user profiles (e.g., IMSI, address(es) used in the packet data network) of all mobile terminals registered with this SGSN. In Figure 1, since the embodiment is concerned with data transmission, only the SGSN is illustrated as being in communication with RNC 3 and AGW 4, across the Iu interface. The RNC 3 typically has a dedicated (not shared) connection to its SGSN 5, such as a cable connection.

Communications between the AGW 4 and the SGSN 5 are preferably IP based communications, and may be, for example, transmitted over a broadband IP network. Further, the connection between the Femto and the AGW 4 may use the PSTN (Public Switched Telephone Network). Typically a DSL cable connects the AGW to the PSTN, and data is transmitted there-between by IP transport/DSL transport. The Femto or AGW converts the cellular telecommunications transport protocols used between the mobile terminal and the Femto 2 to the appropriate IP based signalling.

The femto 2 may be connected to the AGW by means other than a DSL cable and the PSTN network. For example, the femto 2 may be connected to the AGW by a dedicated cable connection that is independent of the PSTN, or by a satellite connection.

The SGSN 5 is in communication with the GGSN 6 (Gateway GPRS Support Node) across the Gn interface. The GGSN is responsible for the interworking between the GPRS network and external packet switched networks, e.g. the Internet. The GGSN enables the mobility of mobile terminals in the networks. It maintains routing necessary to tunnel the Protocol Data Units (PDUs) to the SGSN that service a particular mobile terminal. The GGSN converts the GPRS packets coming from the SGSN into the appropriate packet data protocol (PDP) format (e.g., IP or X.25) and sends them out on the corresponding packet data network. In the other direction, PDP addresses of incoming data packets are converted to the mobile network address of the destination user. The readdressed packets are sent to the responsible SGSN. For this purpose, the GGSN stores the current SGSN address of the user and their profile in its location register. The GGSN is responsible for IP address assignment and is the default router for the connected mobile terminal. The GGSN also performs authentication and charging functions. Other functions include IP Pool management and address mapping, QoS and PDP context enforcement.

In turn the GGSN 6 may route data via any applicable Value Added Service (VAS) equipment 7, before data is forwarded towards its intended destination via the Internet 8. As an example of the functionality of the VAS equipment, the traffic may be inspected for adult content before reaching the end-user if this user is under 18 years of age.

For billing purposes in particular, a PCRF (Policy and Charging Rules Function) apparatus 9 is also provided, in communication with both the SGSN 5 and the GGSN 6.

The SGSN 5, GGSN 6, VAS 7 and PCRF apparatus 9 comprise the core network of the mobile telecommunications network.

Mobile telecommunications networks have an active state of communication with their mobile terminals and an inactive/idle state of communication with their terminals. When in the active state, as the mobile terminals move between different cells of the network, the communication session is maintained by performing a "handover" operation between the cells. In the inactive/idle state, as a mobile terminal moves between different cells of the network the mobile terminal performs "cell reselection" to select the most appropriate cell on which to "camp" in order that the mobile terminal can be paged by the network when mobile terminating data is destined for that mobile terminal.

Conventionally, the mobile terminal or network determines whether a handover/cell reselection procedure should be triggered in dependence upon measurements of the radio signals of the cells in the region of the mobile terminal. A filter is applied to the signals (either by the network or by the mobile terminal) which calculates an average (e.g. arithmetical mean) value of these signals over a particular time period. This filtered/average values of the cells are then compared with each other or with a threshold value. In dependence upon these comparisons, cell reselection/handover related procedures are triggered. This cell reselection/handover process generally comprises taking radio signal measurements of neighbouring cells and comparing these to each other and to the radio signal of the current cell to determine which cell provides the best signal strength/quality. Handover/reselection to the best cell can then occur.

Generally calculations to determine whether to perform a handover from one base station to another base station are performed by the network, whereas calculations whether to perform cell reselection are performed by the mobile terminal.

Data in a mobile telecommunications network can be considered to be separated into "control plane" and "user plane ". The control plane performs the required signalling, and includes the relevant application protocol and signalling bearer, for transporting the application protocol messages. Among other things, the application protocol is used for setting up the radio access bearer and the radio network layer. The user plane transmits data traffic and includes data streams and data bearers for the data streams. The data streams are characterised by one or more frame protocols specific for a particular interface. Generally speaking, the user plane carries data for use by a receiving terminal - such as data that allow a voice or picture to be reproduced - and the control plane controls how data are transmitted.

In addition to the elements and functions described above, mobile telecommunications networks also include facilities for transmitting SMS messages. SMS messages are transmitted over the control plane only (and not the user plane).

This architecture is what currently is being used to carry all packet data to and from mobile terminals. That is, in today's implementation of the Packet data architecture, user plane traffic traverses across all the network elements shown between the Node B or Femto on which the user is camped and the internet. That is, all data is directed from the applicable RAN through the core network components SGSN, GGSN and VAS before reaching the internet. All PS traffic accordingly follows the same path and therefore has the same network costs. All applications are processed on the client (on the mobile device) or on the server (which is connected to the internet), and the network core therefore acts like a bit-pipe in the current architecture. For data, where the mobile network operator cannot add any value by carrying it on its own backhaul transport, core transport or cellular core infrastructure (the core network), such as data destined for the public internet without required intervention from the core network, there is no benefit to routing this data via the core network.

However, a large percentage of this traffic can be handled in a more intelligent manner for example through content optimisation (Video & Web), content caching, or locally routed or directly routing content to the public Internet. All these techniques reduce the investment required by a mobile operator to carry the data on its own backhaul and core transport or cellular core infrastructure.

In order to offer low cost packet data, to support new services and to manage customer expectation, a step-change reduction in the end-to-end cost per bit is required.

Mobile operators want to reduce their packet data handling costs through alternate network architectures based on commoditised IT platforms, breaking away from the traditional architecture based on their voice legacy. These new network architectures overcome the Access architecture issues of today

In order to successfully offer cheap packet data and be able to compete with the fixed broadband offers (flat fee) a solution is proposed which focuses on the reduction of the end-to-end cost per bit, especially for Internet access service.

This enables mobile operators to reduce packet data handling costs by means of an alternative network cost model architecture, which breaks out of the traditional network architecture and nodes and utilises lower cost transport networks to optimise the data flow.

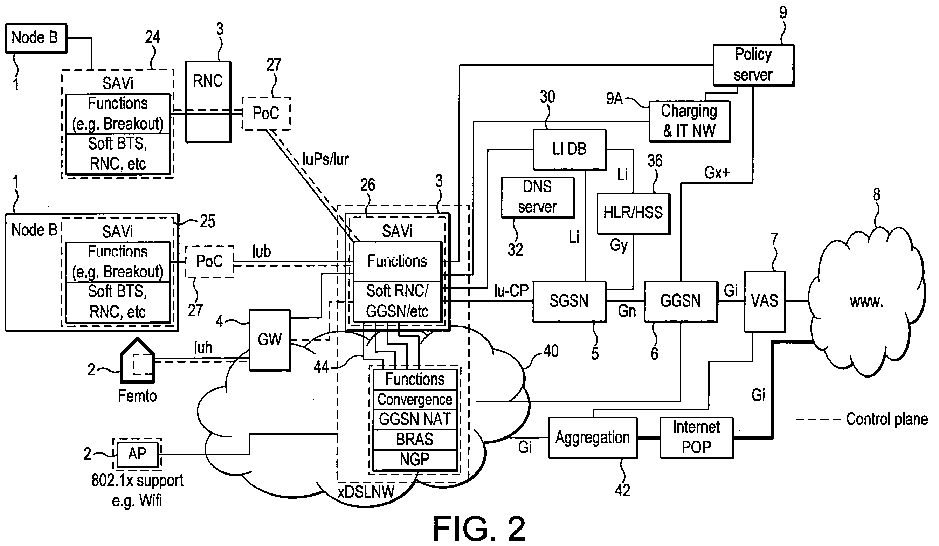

In this regard, Figure 2 shows a high level description of the architecture that may be adopted to deploy this on a 3G network.

According to this arrangement, novel "platforms" (control units) 24, 25, 26 for performing functions such as caching, routing, optimisation and offload/return decision functionality are integrated into the network. This decision functionality may be incorporated in the radio architecture. In this regard, the platforms 24, 25, 26 may be incorporated into the NodeBs 1 (25), RNCs 3 (26) or exist as separate physical entities (24). It is these platforms 24, 25, 26 that, for example, determine the path of communications originating from the mobile terminals.

The exact placement of the platform 24, 25, 26 is not essential, and, for a macro 3G network, it can be placed at or between the Node Bs and the RNCs, and also between the RNCs and the SGSNs (or any combination thereof). It would also be possible to place the platform 24, 25, 26 at the GGSN (although not the SGSN as this does not control user data, only control data).

In the 3G Macro network, the aim is to offload a high percentage of the macro network traffic from the core and transport (IuPS, Gn, etc) by diverting specific traffic type for certain user(s) class directly to the Internet.

Where the platform 24, 25 is located in the Node Bs (or on the Iub interface), it may be possible to redirect the data from all the remaining mobile network elements (e.g. the RNC, SGSN, GGSN and VAS for macro 3G), and sending the data directly to the Internet 8. In a similar manner, where the platform 26 is located at the RNC (or on the Iu interface), it becomes possible to redirect the data from the SGSN 5, GGSN 6 and the VAS 7. The alternative data route is preferably a DSL using ADSL.

It is also preferable to aggregate the alternative data routes for each cell, where applicable. In this regard, each cell will have at least one RNC 3 and a plurality of Node Bs, so where the decision blocks are situated at or in the vicinity of the Node Bs, for instance, there will be a plurality of links which should ideally be aggregated before being passed to the Internet 8. At the point of this aggregation 42, there is preferably a further decision block which enables data to be returned to the legacy route. For instance, a new policy rule may have been implemented, which requires or enables previously offloaded data to be returned to the core network route. This new policy rule may be communicated to the return decision module by the core network policy module. In Figure 2, this returning of data is only shown to the VAS 7, but the data may be returned to one or more of the other core network elements.

Each of the NodeBs 1 is connected to the mobile network core through a Point of Concentration (PoC) 27. All traffic from the NodeBs 1 which is to be routed through the core mobile network is routed to the PoC 27. This includes both user plane and control plane data. On the control plane level, the PoC 27 routes data to and from the SGSN 5 and the GGSN 6. Control data is also sent to and from other core network components, including the Lawful Interception Database (LI DB) 30, DNS Server 32, Policy Server 9 (including Charging rules and IT Network 9A) and Home Location Register/Home Subscriber Server (HLR/HSS) 36 (which contains subscriber and device profile and state information).

User plane data is transmitted by the PoC 27 to the SGSN 5 and the GGSN 6. From the GGSN 6, data is routed across a VAS 7 node to the Internet 8. In 3G this is the standard data path from the mobile terminals to the Internet.

To implement an advantageous feature, an alternative path on which to re-route certain data to the internet 8 is provided, whereby, each NodeB 1 and Femto 2 may be connected to a fixed line connection 40 (e.g xDSL) which is directly connected to the internet 8. These xDSL connections may be made directly to the NodeB and/or Femto or made to the NodeB/Femto via other components, such as the PoC 27. In figure 2, the xDSL Network 40 may be a third party network or may be a network owned or controlled by the owner of the mobile telecommunications network. By using such an alternative path, radio capacity, backhaul transport resource, core transport resource, cellular core network resources can be saved as well as improving performance and enhancing revenue for the mobile network operator.

As each Node B 1 and/or PoC 27 is associated with a platform 24, 25, 26, for each data packet request originating from a mobile terminal, a decision at the platform 24, 25, 26 is made as to whether the traffic may bypass the core mobile network entirely or may be passed into the core mobile network. The location at which the traffic is routed towards the internet is preferably at the platform 24, 25, 26; however, it may alternatively be routed out from the core network towards the internet at a different component. Traffic offloaded from the macro network is routed by the platform 26 to the xDSL network 40 by link 44 (the decision to offload this traffic may have been made at platform 24, 25 or 26 - although the decision is implemented at platform 26)

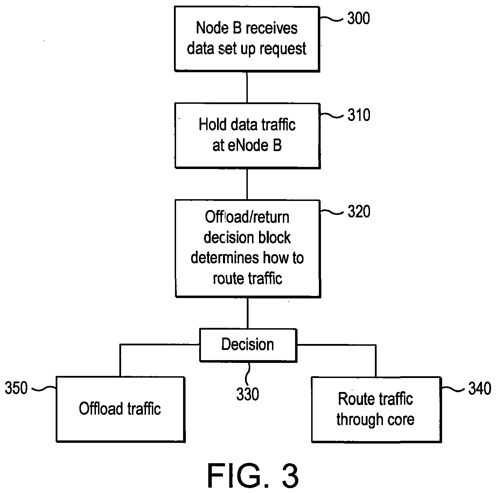

Preferably the Offload/Return decision is dependent upon the type of data or user. To exemplify this feature of the embodiment, Figure 3 is a flow diagram showing the steps taken when deciding how to route the traffic in the architecture of figure 2. For instance, consider an NodeB receives a request to set up a data call from a user device which is camped on the NodeB at 300. Once the NodeB has identified the request as a data call and the type of traffic/user, rather than automatically routing the data traffic to the core network, the data request is held at the NodeB at 310 until a decision has been made as to how to route the data, in particular whether to offload the traffic directly to the internet or whether to return the data through the core mobile network. Typically, the signalling (control plane) for the connection will continue through the normal route but the user data traffic will be held at the NodeB, this is possible by virtue of the separate user and control planes, as shown in figure 2.

The decision as to whether or not to use the Core mobile Network to route the data traffic can be based on various aspects, particularly relating to the properties of the data being routed and/or status of the user routing the data.

The Mobile Network may add value to traffic by providing a number of services, such as compressing the user data to speed-up the data transfer while downloading (if this functionality is not already supported by the platforms 24, 25, 26). These different services can be broken up into groups and provided by different entities (e.g. this enables greater flexibility in the provision of the services, such as the mandated Internet Watch Foundation - IWF - requirement, which can only be supported by the mobile operator). The platforms 24, 25, 26 therefore make a decision on whether to service the data locally through caching, fetch the data from other node or from the internet via offload functionally or whether to route the traffic through the core network, based on the applicability of one or more of the services to the traffic. That is, platform 24, 25, 26 decides when data traffic requires one or more of the services and when it can do without them.

It should also be noted that these services are ones that could be provided without using the core network. These are services that add value to the customer, and which subscribers will pay for (explicitly or implicitly).

Referring again to Figure 3, the platform 24, 25, 26 decides at 320 what to do with the traffic (from coming for the network/ internet or orientated by the device). This decision may be made by interrogating certain servers or databases stored centrally within the core network which can compare the type of service, type of user etc with criteria which identifies the type of action shall be considered, e.g whether the traffic is suitable for offloading directly to the internet (at 330) from the NodeB or whether the traffic should be routed through the core (at 340). Examples of some of the considerations used in influencing the decision of whether to offload the traffic are discussed below in more detail. The implementation of this data offload technique needs to be carefully considered, as it places additional constraints on the network design.

The following is a non-exhaustive list of examples of challenges that have to be considered when implementing the data offload technique:
a) maintaining Customer Services provided by the core network or otherwise;
b) maintaining Network Services (e.g. Charging Rate Limiting/application control); and
c) maintaining Regulatory Services (e.g. to enable Lawful Interception and Regulatory Content Filtering).

Some specific examples of Customer Services that can be taken into account by the offload decision module include:
i) Parental Control: A service which customers subscribe to that filters content in order to shield children from unwanted websites and programs. Whether traffic from a given user needs to be filtered can be determined by a Common User Repository (CUR) lookup, where the CUR stores user profile information, such as whether the user is an adult or a child etc. If traffic needs to be filtered, then either the traffic cannot be offloaded or it needs to be filtered somewhere other than the core network.
ii) Traffic Optimisation: Optimisation is only required for low bandwidth connections (2G). By looking at the Radio Access Type (RAT) and the International Mobile Equipment Identity (IMEI) it can be determined whether or not a subscriber needs these services. Where traffic optimisation is not required, the traffic can be offloaded
iii) Marketing Proposition: The mobile network is typically setup to provide full mobility with acceptable Quality of Service (QoS). A further option could be to offer best effort QoS without guaranteed full mobility. As an example, for when a heavy user has exceeded their fair usage limit, their traffic could be designated as low priority traffic and offloaded.

The Network Services that can be taken into account by the offload decision module are typically those that the network operator needs to manage its network. Some examples include:
i) Charging: The charging plan that a user subscribes to can be used to determine whether or not to offload that user's data. For instance, it is most easily avoided when the customer has a flat rate plan. That is, users on flat rate plans do not need their usage tracked for charging purposes in real time and so can be offloaded onto the alternative route. For users who are roaming or whose charging plan depends upon usage, then, the operator/supplier needs to track their total usage in real-time, and so their data needs to be maintained on the core network route so that rate-limits and data usage can be accurately tracked and alarms/alerts activated when usage exceeds allowances. This is because, if this is not avoidable then Call Data Records (CDRs) need to be generated by the module for the real time charging.
ii) Rate-limiting/application control: This is currently used to manage the traffic flow according to a certain usage policy. Excessive bandwidth usage or controlling P2P applications are common reasons to rate limit users. Therefore, where a user transmitting data is determined to be under a rate restriction (i.e. throttling) or the data they are transmitting has an application restriction (i.e. the application is blocked), then that data can be offloaded. This exceeded allowance information would typically be communicated to the decision module (24, 25, 26) by the HLR/HSS. This traffic management enables the total traffic volume to be reduced and is typically fully managed by the network operator.
iii) QoS: The network uses QoS to manage traffic during high load situations and to support marketing propositions. To enable QoS considerations to be enforced by the offload decision module, a connection is established between the offload module and the Policy and Charging Rules Function (PCRF) entity. This enables decision criteria to be dynamically fed to the offload module, for instance to maintain high priority users on the core network path and/or high priority application types, such as VoIP. It is to be appreciated that the connection to the PCRF is not essential, and alternatively, static or semi-static rules, pre-stored with the offload module, can be considered.
iv) Mobility: Mobility, such as cell handover, is an issue that needs to be managed by the core network. Therefore, terminals that are in motion should not be offloaded. The mobility of a mobile terminal could be determined by querying the Node B. Some users could be provided with a contract that allows only fixed or limited mobility use, so that the service provided was equivalent to a fixed broadband package. Different charging tariffs could be applied depending on whether a user was at a fixed location or mobile. Two ways the offload decision module can handle a mobile terminal's mobility are as follows:
   1. The offload decision module can have the capability to characterise the radio link between the device and the network by monitoring the number of handovers implemented for the mobile terminal. If a certain number of handovers occur over a fixed duration, the mobile terminal can be classified as in motion, and any data from the mobile terminal can thereafter be routed back into the core network to avoid any further packet data delay. This of course assumes that the mobile terminal had been designated for data offload on the bypass link.
   2. The offload decision module is situated on the IuPS for the 3G network (i.e. between the RNC and the SGSN) or S1 for the LTE (i.e. between the eNode B and the PoC), and checks the Iur or X2 signalling information (i.e. between a set of RNCs controlled by a given 3G SGSN and between a corresponding set of eNode Bs for LTE). If this monitoring shows that a mobile terminal is hopping between cells one of which is not connected to (and therefore managed by) the offload decision module, any data from the mobile terminal can thereafter be routed back to the legacy path through the core network.

Regulatory Services are services that are mandated by legislation, and are typically provided to all traffic. Some specific examples of Regulatory Services that can be taken into consideration by the offload decision module include:
i) Lawful Interception (LI): The ability to provide Lawful interception will be maintained in any offload or local breakout plans. The options for offload are:
   - Maintain the evaluation of LI in the core network, and not offload users whose traffic needs to be intercepted (e.g. where the user has been tagged by the police for communication interception). Since the LI functionality is handled by the core network, the core network accordingly cannot be bypassed;
   - Add LI capability to the offload decision module, which will require a local LI interface with a dedicated database identifying the users to be intercepted. With this option, upon identifying traffic from a user on the list, a copy of the data can be made at the local LI interface and the traffic offloaded. The copied data can then be reported to the appropriate authorities; or
   - Alternatively, LI may be performed at the Internet Service Provider (ISP). With this option, since LI is considered at the ISP it is not a consideration at the offload decision engine, and so the data may be offloaded, where possible. However, to effect this option, a Service Level Agreement (SLA) with relevant ISP providers may need to be amended in order to include the support of LI in the ISP network rather than in the mobile network infrastructure.
ii) Regulatory Content Filtering (e.g. for Internet Watch Foundation (IWF)): This required functionality blocks illegal websites. This functionality could easily be added to the offload decision module as it is not processor intensive. An http proxy server, for instance, could be used to support this functionality. Otherwise, the traffic will be returned back to a dedicated core node(s).

A further criterion that the platform (24, 25, 26) module may consider is the priority of the customer. In this regard, a network operator may wish to prioritise traffic across its network based on the priority level of the customer. For example, a high value customer (e.g. a corporate customer or a subscriber with on a high tariff contract) may be given priority over a low value customer. In this situation, a network may decide to offload lower value customers directly to the internet. This is related to the QoS criterion mentioned above, although the QoS criterion is generally linked to traffic management to maintain a balanced network, whereas the priority referred to can be used to ensure subscribers get a level of service commensurate with their service agreement.

The embodiment of Figure 2 is in relation to a 3G network. Embodiments of the invention are equally applicable to 4G (LTE/SAE) networks.

The LTE/SAE macro network includes eNode Bs which make up the RAN. The eNode Bs effectively combine the functionality of the node B and the RNC of the 3G network. These eNodeBs are the network components which communicate with the mobile communication devices. It is envisaged that the eNodeBs will be arranged in groups and each group controlled by a Mobility Management Entity (MME) and a User Plane Entity (UPE).

The MME performs many of the mobility functions traditionally provided by the SGSN. The MME terminates the control plane with the mobile device. It is responsible for terminating NAS (Non Access Stratum) Signalling such as MM (Mobility Management) and SM (Session Management) information as well as coordinating Idle Mode procedures. Other responsibilities of the MME include gateway selection inter MME Mobility and authentication of the mobile device.

The UPE manages protocols on the user plane such as, storing mobile terminal contexts, terminating the Idle Mode on the user plane, and PDP context encryption.

The platforms would operate in the same manner as described in relation to the 3G network. The platforms may be located at many different locations in the 4G network.

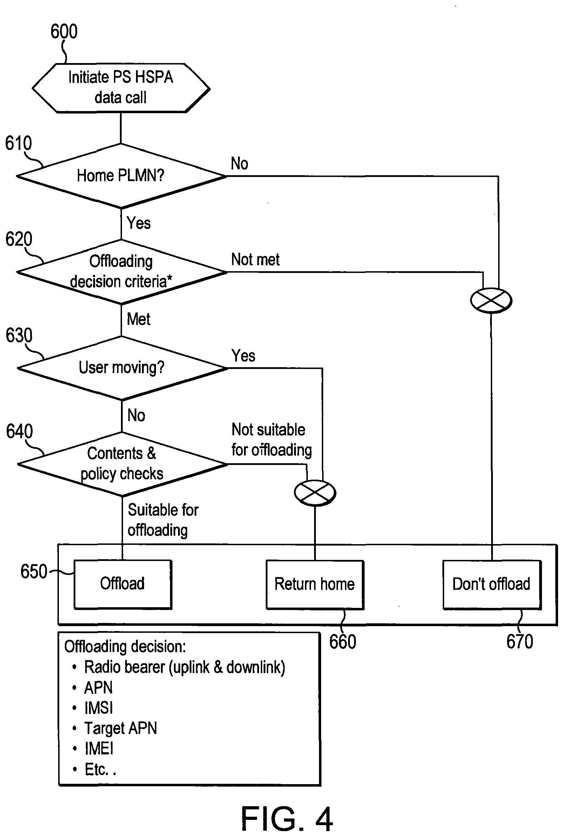

A more specific example of how the platform 24, 25, 26 may be implemented is described in relation to Figure 4. Figure 4 is a flow diagram illustrating a preferred method for deciding whether to offload data traffic to the internet. The decision structure is composed in a hierarchical form in order that certain types of user or data are always directed through the core network. The example of figure 4 is described for a 3G network but it will be clear to those skilled in the art that these decisions could be applied to any type of radio access technology.

Once a PS HSPA data call (or other connection) is made and received at the Node B at 600, a primary consideration by the platform 24, 25, 26 at 610 is whether the device is operating on its home network or whether it is roaming. If the device is roaming then all traffic is automatically routed through the core network. The reason for this is that the home network would want to guarantee the security and accurate billing (due to different charging principle between home and visited operator) of the user's traffic. The platform 24, 25, 26 at 610 will also consider other factors, such as what application types running on the mobile terminal require connections. If the mobile device is operating on its home network at 610, or if the applications do not require a connection to the core network, the platform 24, 25, 26 considers secondary offloading criteria at 620. Examples of secondary criteria may include the functions required by the device, the radio bearer currently used by the device, the APN, or the priority level of the customer identified, for example, through IMSI, IMEI or the target subscriber. If the offloading criteria are met at 620, the decision moves to the tertiary criteria, otherwise, the traffic is not offloaded.

At 630, the system checks the mobility of the user. If the user is moving, he is considered not suitable for offload due to an expected interruption delay of the user data when moving between source and target cell.

Finally, at 640 the system conducts a contents and policy check to confirm whether the user is suitable for offload. If it is determined that the user is suitable for offload to the internet, the eNodeB offloads the traffic to the internet at 650. If it is determined that the user is not suitable for offloading to the internet at 640 then the procedure returns "home" at 660. A connection is provided by a network core in a conventional way and the tests of the flowchart shown in figure 4 are repeated periodically to determine whether offloading directly to the internet becomes possible subsequently.

If the device is determined to be roaming at step 610, then the device is not offloaded directly to the internet, but remains connected via the network core in a conventional way at 670. Similarly, if the offloading criteria are not met at steps 620, the mobile device remains communicating via the network core in the conventional way, again at 670.

The hierarchical decision method is useful because it reduces the number of challenges across the network. It will be evident to those skilled in the art that different hierarchical structures will be appropriate for different networks, different conditions etc and that the example of figure 4 is just one way the decision could be made.

For instance, whilst arrangements have chiefly been described in relation to transmitting data traffic from a mobile terminal to a data network, the principles may also be applied to transmissions from a data network towards a mobile terminal.

In the arrangements described above the decision regarding the route is said to be made at call set-up. However, it should be appreciated that a decision to change the routing of data may be made at the beginning of a communication session (for example establishment of a PDP context), or during a communication session. The routing of data may change several times during a single communication session. For example, when a communication session is initiated it may be detected that the user is not moving, in which case a decision will be made to offload the data over the alternative data route. Subsequently it may be detected that the user is moving, and at this point a decision may be made to beginning routing data for the communication session via the mobile network. During the communication session, the mobile terminal may become stationary for a prolonged period of time again, and at this time a further decision may be made to send subsequent data during the communication session via the alternative data route. Subsequently again, the user may then attempt to access age-restricted content, and it will be detected that parental control is required. In response for the requirement for parental control, a decision may be made to redirect subsequent data during the Communication session via the core network so that core network parental controls can be applied.

It is to be appreciated that the present embodiments of the invention are to be distinguished from HSDPA offload, a technique used on the Iub interface between the Node B and the RNC. HSDPA offload which serves to separate data traffic from voice traffic, so that non-real time data traffic is sent down a less expensive backhaul to complement or replace the expensive E1/T1 TDM backhaul link between the two. Once this diverted traffic reaches the RNC, however, it is returned to the cellular and transport core networks and there is no differentiation made based upon data traffic type.

In the arrangement described above the platform 24, 25, 26 primarily handles data offload decisions. As will be described below, the platform can perform may other functions.

Embodiments of the invention in which the Radio Access Network controls the use of resources by mobile terminals will now be described.

### Platform Architecture

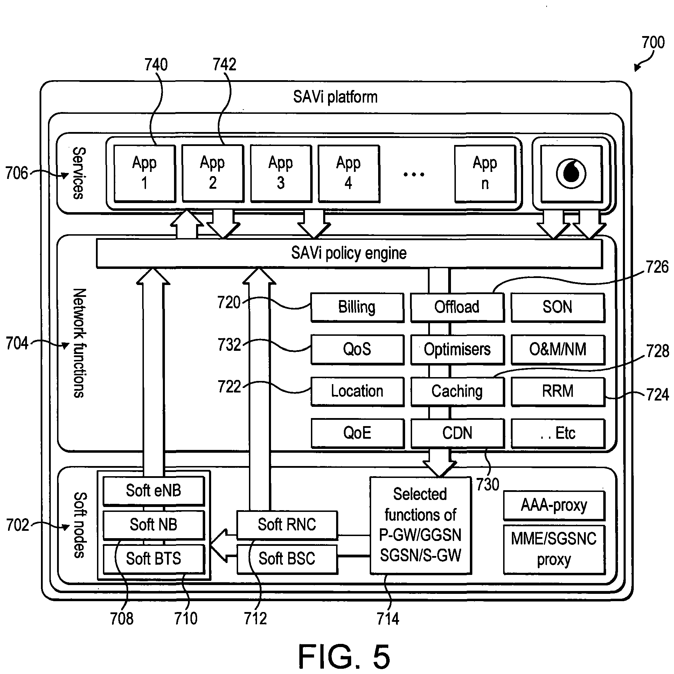

As discussed above, a mobile telecommunication network is modified by the introduction of a "platform" 24,25,26. Such a platform (or control unit) is shown in more detail at 700 figure 5 and which includes three principal parts: soft nodes 702 (physical/transport layer), network functions 704 and services 706 (application layer).

The platform 700 communicates with the radio frequency/RF part (radio unit) of a base station, such as a NodeB 1. The soft nodes 702 of the platform 700 comprise components such as a soft NodeB 708, soft BTS 710, soft eNodeB 711 and soft RNC 712 and soft SGSN/GGSN 714. The soft nodeB 708 provides functions equivalent to the baseband part of a conventional NodeB in a 3G telecommunications network. The soft BTS 710 provides baseband functions equivalent to the baseband functions of a BTS in a conventional 2G mobile telecommunications network. The soft enodeB 711 provides baseband functions equivalent to the baseband functions provided by a conventional enodeB in a 4G mobile telecommunications network. The platform 700 may therefore communicate with the radio frequency part of a 2G, 3G or 4G base station and provide appropriate baseband services for 2G, 3G or 4G technologies (or indeed for other technologies). A 3G mobile terminal that wishes to obtain telecommunication services from the mobile telecommunications networks connects wirelessly to the radio frequency part of a NodeB. Baseband functions may be provided either by a baseband part of the conventional NodeB or by the soft NodeB 708 forming an element of the soft node part of the platform 700. For example, the soft NodeB 708 may receive radio measurements from the radio frequency part of the NodeB to which it is connected, and may provide these radio measurements to other elements of the platform 700.

The network functions part 704 of the platform 700 includes modules for performing functions similar to those performed by the core network of a mobile telecommunications network, such as billing 720, location tracking 722 and the radio resource management (RRM) 724. The network functions may further comprise an offload decision module 726 that performs a function similar to the offload decision modules 24, 25 and 26 described above. The network functions part 704 may further comprise a caching function 728 and Content Delivery Network function 730.

The network functions parts 704 of the platform 700 provides an Application Programming Interface (API) framework to the services part 706 of the platform 700. The services part 706 of the platform supports a plurality of applications 740, 742 etc.

The network functions fall into three main categories, those that enable the network operation (e.g. charging, O&M), those that support service operation (e.g. Location) and those that optimise the usage of the network by certain applications and services (e.g. Caching, Video Optimisation).

The applications supported on the Platform 700 are the entities that supply or demand the flow of data on the network, akin to a server on the internet, e.g. gaming server, navigation server.

The API is implemented by a software program running on the network function part 704 which presents a novel standardised interface for the applications 740, 742 etc of the services part 706. The novel standardised API provides a consistent interface, defining communication protocols, ports etc. Full details of the API may be published to allow a multiplicity of applications to be developed for the platform 700 by multiple developers. This should be contrasted with prior art arrangements where each component of a mobile telecommunications network (such as BTS, BSC/RNC, SGSN etc) is proprietary and tends to have a unique interface, meaning that a different application must be written for each node of a conventional network.

The applications 740, 742 etc may provide services to users of the telecommunications network by co-operating with other parts of the platform 700.

The details of the use of each application used by the a user of the mobile telecommunications network is stored in an application context/ container. The Application context contains application names, protocol used to carry such application, their characteristics that are measured/ reported over period of time and some statistical information about these applications (volume, number of users using these applications, etc.).

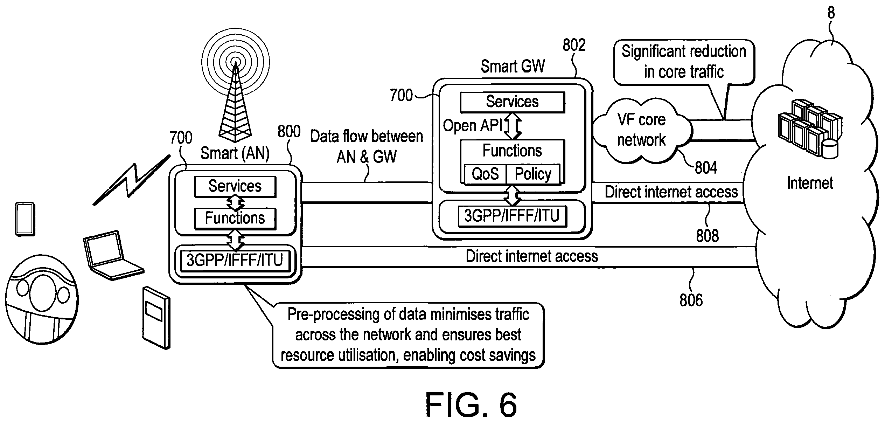

As shown in figure 6, a platform 700 may be provided at each base station of the mobile network (where it is connected to the radio frequency part of the base station - NodeB 1 in figure 2), forming an access node 800. Platform 700 may also be provided at the RNC (item 3 in figure 2) where it forms a gateway 802. The access node 800 and the gateway 802 are both configured to communicate directly with the network core 804 (for example, comprising the SGSN 5, GGSN 6 and VAS 7 (as shown in figure 4)). The access node 800 and gateway 802 may also be connected to the internet 8 for direct internet access via direct links 806 and 808, respectively, such that at least a portion of the core network 804 is bypassed in the manner described above.

The following are examples of access technologies that can be provided within the access node 700:
3GPP: GSM/GPRS, UMTS/HSPA & LTE
IEEE: 802.11 family & 802.16 family
ITU: DSL, ADSL, VDSL, VDSL2

### Allocation of Functions to Platforms

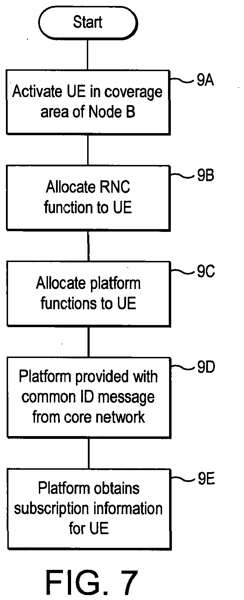

The steps performed when a mobile terminal is activated at a NodeB, at the Femto or at the Access Point (AP) of the network which includes the novel platform 700 will now be described with reference to figure 7. At step 9A the mobile terminal (UE) is activated within the coverage area of a particular NodeB, at the Femto or at the AP. The access part of the NodeB, at the Femto or at the AP communicates information from the mobile terminal to the platform 700 associated with the NodeB, at the Femto or at the AP. At step 9B the platform 700 then allocates the baseband NodeB, at the Femto or at the AP function and the RNC or BRAS (Broadband Remote Access Server) function either at access node 800 at the NodeB at the Femto or at the AP site or at the gateway 802 at the RNC or BRAS site of the network or even from neighbouring nodes that have spare resources to pull. The decision as to whether the RNC or BRAS function is allocated at the platform 700 of access node 800 or the gateway node 802 may be made depending on various criteria, including:
* The device type - for example this decision can be based on the radio access capabilities that the mobile terminal indicates upon activation, such as whether it is operating in the circuit switched or packet switched domains.
* The location of the mobile terminal. If the mobile terminal is near the edge of the cell (which can be determined by network power measurements or neighbour cell measurements from the mobile terminal, within a plus or minus 3dB range for the RACH).
* The establishment cause of the connection request: such that the NodeB can filter the unnecessary signalling information from the mobile terminal which is not critical - for example periodic routing area update messages.

Upon allocating the baseband NodeB at the Femto or at the AP and the RNC or BRAS function, the NodeB at the Femto or at the AP may allocate the mobile terminal to a particular carrier dedicated to the RNC or BRAS function.

Once the RNC or BRAS function is allocated to either the access node 800 or the gateway 802 at step 9C, other functions performed by the platform 700 at the access node 800 (or other access node) and the gateway 802 (or other gateway) are allocated to the mobile device. All other platform functions may be provided by the platform where the RNC or BRAS function is allocated to the mobile terminal. However, a platform at a different location to that which provides the RNC or BRAS function to the mobile terminal may provide some or all other functions.

At step 9D the platform which is allocated the RNC or BRAS function is provided with a Common ID message from the core network 804.

At step 9E, this message is used by the platform 700 to look up the complete subscription information for the mobile terminal, as well as the resource requirements (QoS) of the services required and negotiated PDP context, this information being provided by the core network 804.

The subscription information relating to the device that is obtained from the central nodes (e.g, core network) 804 is used to allocate the other functions at access node 800 and/or the gateway 802 in dependence upon various factors, including:
Detailed information regarding the mobile terminal type obtained from the core network.
The subscription characteristics of the mobile terminal.
The applications previously used most frequently by the mobile terminal.
The characteristics of the applications previously used by the mobile device and the performance requirements thereof.
The historic mobility of the mobile terminal (speed, connection, distance travelled etc).
The location of the mobile terminal and the likely destination of traffic from the mobile terminal based on historic usage patterns.
The load of the NodeB providing RF services to the mobile terminal, and the historic traffic trends at that NodeB at Femto or at AP.
The characteristics of the NodeB at the Femto or at the AP providing RF services (for example, the location, what other devices are connected through the NodeB at the Femto or at the AP, the number of machine to machine devices being attached and served by the NodeB, etc).

As mentioned above, a single mobile terminal may have platform functions/applications allocated on a plurality of platforms. Generally, when a mobile terminal is near-stationary it is most efficient for its functions/applications to be served from an access node 800 (i.e. distributed), whereas mobile terminals with greater mobility (or lower anticipated cell hold times) will be most efficiently served by having fewer or no functions/applications served from the access Node 800, and more or all functions/applications served from a gateway 802 (i.e. centralised). The assignment of functions/applications to a mobile terminal between an access node 800 and a gateway 802 will also depend upon the characteristics of the service type provided by the application (for example, the average IP session duration, the popularity of the particular application, the average mobility of mobile terminal using the service provided by the application etc).

Traffic management may be performed at the access node 800, where there is access to real-time radio information from the radio frequency part of the NodeB, the Femto or the AP serving the mobile device.

Centralised Radio Resource Management (RRM) may be provided at the gateway 802, and maintains performance across different access modes 800, which may have different radio access technologies, frequency bands, coverage etc. The RRM function 724 of the platform 700 of the gateway 802 may obtain information regarding radio traffic management from each access node 800 to dynamically position subscribers to particular radio technology. This technique will be used to allocate network resources based on the resource availability, application used and user mobility, For example, the traffic management information may be provided by the soft NodeB 708, Femto or AP of the platform 700 at the access node 800. This soft NodeB 708 obtains radio information relating to the mobile terminal from the radio frequency part of the NodeB to which the mobile terminal is wirelessly connected.

For a particular mobile terminal, functions provided by an access node 800 and gateway 802 may be coordinated to work together in an advantageous manner (i.e. a hybrid or distributed arrangement). For example, the gateway 802 may set operating limits or ranges within which functions performed by the access node 800 may be performed, without reference to the gateway 802. When the functions move outside the ranges set, control of those functions may be passed to the gateway 802.

Further, the access node 800 and the gateway 802 may cooperate to advantageously optimise content delivery to a mobile terminal.

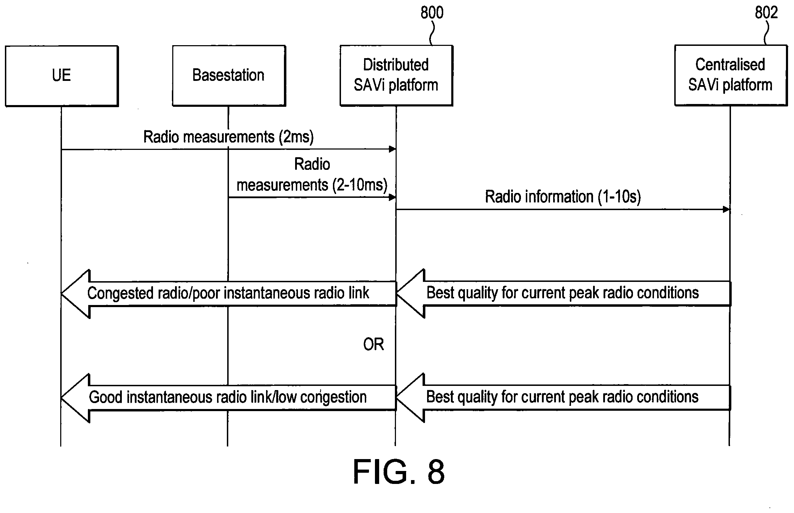

The optimisation of content delivery will now be described with reference to figure 8 of the drawings. Content may be optimised at gateway 802 and at an access node 800. The gateway 802 may serve multiple access nodes 800, and my distribute content to those multiple access nodes 800, for onward transmissions from each of those access nodes 800 to a mobile terminal via the radio frequency part of NodeB, the Femto or the AP serving that node. Radio quality measurements are reported by the mobile terminal to the access node 800 at regular intervals, such as 2 millisecond intervals. Radio quality measurement relating to that mobile terminal are transmitted between the radio frequency part of the NodeB, the Femto or the AP serving the mobile terminal to the access node 800 at regular intervals, such as between 2 and 10 millisecond intervals. These radio measurements are received at the soft nodes 702 and are passed to functions 704 (e.g. to QoS function 732 for analysis). These radio frequency measurements from the mobile terminal and the NodeB are reported by the access node 800 to the gateway 802 (e.g. to QoS function 732 of the gateway 802 for analysis) at regular intervals, such as intervals of between 1 and 10 seconds. The gateway 802 may receive radio information from multiple access nodes 800. The radio measurements received by the gateway 802 may be analysed over a relatively long period, such as between 1 and 2 minutes. The radio quality measurements may be averaged (for example, the arithmetical mean of the radio quality maybe determined) over this time period. The transmission of content from the gateway 802 may then be optimised according to this calculation. Where the content is distributed by the gateway 802 to a plurality of access nodes 800, the content distribution will be based on the analysis of the radio quality indicators from all of the access nodes 800 . The analysis may consider the maximum or peak radio performance over the time period of between 1 and 2 minutes.

When the content is received by each access node 800, the access node 800 then distributes the content to each mobile terminal. This distribution is optimised based on real-time network mode and mobile terminal specific radio link quality, as determined over a period of, for example, between 1 and 10 milliseconds. That is, content delivered to a mobile terminal that has high radio link quality may be optimised in a different manner to a mobile terminal that had poor radio link quality.

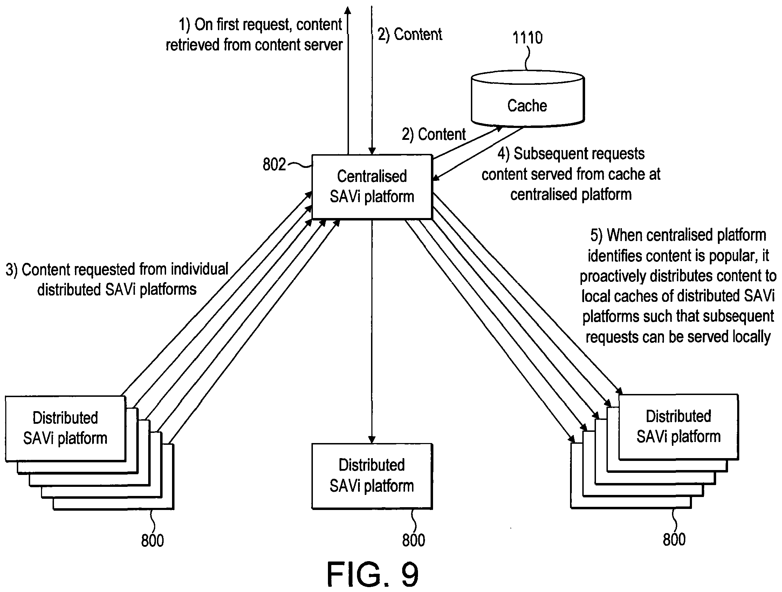

The co-operation between access nodes 800 and gateways 802 may further enhance the distribution of content in a manner now to be described with reference to figure 9.

When a mobile terminal requests a particular content item, this request is transmitted to the access node 800 serving that mobile terminal, assuming that this is the first request for this content item to the access node 800, the access node 800 passes this request to the gateway 802 serving the access node 800. Assuming that this is the first request for this content item from the gateway 802, the gateway 802 retrieves the content from a content server. The content is then provided by the content server to the gateway 802, and from there is distributed to the access node 800, and onwardly to the requesting mobile terminal. Advantageously, the gateway 802 maintains a record of content items that are requested frequently. When a content item is determined by the gateway 802 to be requested frequently, this is stored in a cache 1110 associated with the gateway 802 (which may be the cache 728 of the platform 700). Subsequent requests for that content item from access nodes 800 to the gateway 802 can then be serviced by retrieving the content item from the cache 1110 and distributing the content item to the requesting access node 800, and thus avoiding the need to request the content from the content server.

The gateway 802 may be further configured to identify popular content items that are likely to be requested by a large number of access nodes 800. When it is determined that a content item is popular, the gateway 802 may push these content items to each of the access nodes 800 associated therewith (so that this content is hosted at the access node 800, using Content Delivery Network (CDN) function 730 of the network functions 704 of the gateway 802 and the access node 800). The content is then available at the access node 800 for transmission to any mobile terminal that requests it, without having to retrieve this content from the gateway 802 or the content server. Advantageously, the distribution of such content items is performed in a manner which takes into account the capacity or the congestion of the link between the mobile terminal and the gateway 802 and the nature of the content. For example, typically a link between a mobile terminal and the gateway 802 may experience very little usage and congestion in the early hours of the morning. The content item can be advantageously transmitted in between the gateway 802 and the access node 800 at this time, when there is spare capacity. The gateway 802 will determine whether the content item is suitable for transmission on this basis, for example, by taking into account a number of times that the content item has been requested, the size of the content item and the storage space at the access node 800. If a content item is relatively small and is time-critical, such as news headlines, then such a content item may be distributed frequently throughout the day, as such content is not suitable for transmission once a day at early hours of the morning, as it becomes quickly out of date.

### Relocation of Mobile Terminal

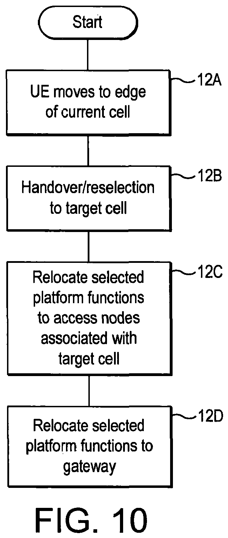

The procedures performed when a mobile terminal moves between cells in the mobile telecommunications network will now be described with reference to figure 10. In the conventional manner at step 12A, when the mobile terminal moves to the edge of its current serving cell, the radio measurements reported from the mobile terminal and the radio frequency part of the NodeB, the Femto or the AP serving that mobile terminal are used by the core network to determine when to perform a handover and to which target cell the handover should be performed. When the best target cell has been identified, handover to that target cell from the serving cell it is performed at 12B in a conventional manner.

At step 12C selected platform functions may be relocated from the source access node (that served the old cell) to the destination access node (that serves the new target cell).

When the source and destination access nodes are served by the same gateway, only base station function (such as soft NodeB functions 708) may be relocated to the destination access node.

The relocation of functions of the access nodes is performed independently to the radio handover, so for some time after the radio handover, the source access node continues to serve content to the mobile terminal through the destination access node. The routing of data packets for the 3G network between the destination and the source access nodes may be performed using an Iu interface between the RNC or BRAS function 712 of the destination access node and the SGSN/GGSN function 714 of the source access node. Alternatively, the routing of data packets between the destination and the source access nodes can be completed by the SGSN/ GGSN function 714 of the destination access node connecting directly to functions of the source access node through an IP interface.

After handover has been completed at step 12B, the access node controlling the mobile terminal may be relocated from the source access node to the destination access node in coordination with the gateway. the standardised handover decisions (mainly based on coverage, quality, power, interference, etc.) for 2G, 3G, LTE & fixed network are used to move the mobile from one node or system to another. However, the platform 700 introduces new opportunity to make the handover decision based on type or characteristics of the certain application, type of user and the QoS requirements.

The timing of the relocation of access node functions from the source to destination platform may be dependent on the following:
- the duration of the current connection/communication of the mobile terminal
- the speed of movement of the mobile terminal
- the characteristics of the applications being used by the mobile device, the quality of service, the predicated type and amounts of transmission ongoing.
- The radio resource allocations status at the mobile terminal
- The respective node of the source and destination and access nodes.

At step 12D, optionally, some functions will be reallocated from the access nodes to the gateway. For example, if the destination access node is heavily loaded and is congested, or has a lower capability then the source access node, or the mobile terminal is determined to be very mobile, it may be advantageous to transfer functions to the gateway. Functions are reallocated from the access node to the gateway by, for example, a Serving Radio Network Subsystem (SRNS) relocation between the RNC function 712 of the access node and the gateway. Alternatively the functions may be reallocated by performing a radio reconfiguration of user connection to the mobile terminal.

The reallocation of functions from an access node to the gateway may be performed at call/communication sessions set-up. At call/communication session set-up, further subscriber information will be provided, which may be used by the access node or gateway to be determine whether it would be advantageous to reallocate functions from the access node to the gateway. Reallocation of functions from the access node 800 to the gateway 802 may be performed during an active connection when a requirement of the communication sessions has been modified, or where the required resource is not available at the access node 800.

According to the same principles, applications may be (re)located (or distributed) between access nodes 800 and for gateways 802 to provide optimised application delivery/best use of the communication resources.

As mentioned above, information about each application used by the user at the mobile terminal is stored in an application context. The application context is shared between each access node 800 and gateway 802 that control the user connection for that mobile terminal. One of the access nodes 800/gateways 802 will be the "master" for that particular application, and that will also be the master of an application specific record in the application context. The application context is advantageously periodically synchronised between the access node 800 and the gateway 802.

The application information is the application context specific to a particular mobile terminal, and this is passed between access nodes and gateways during reallocation for a mobile terminal, enabling the application to be seamlessly passed access nodes/gateways, avoiding impacts to the user experience.

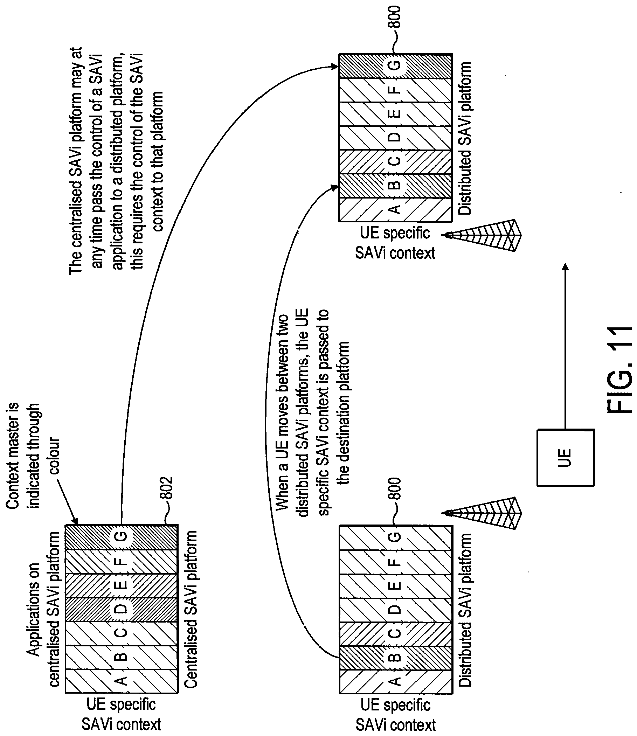

Figure 11 shows the transfer of application information between access nodes and gateways.

### Tailoring Bandwidth to Application

Radio measurements received from the radio frequency part of the NodeB, the Femto or the AP serving the mobile terminal are passed to the soft nodes 702 of the platform 700 (of the access node 800 or gateway 802 serving the mobile terminal), and are passed to the network functions 704 of the platform 700, which then distributes the measurements to where necessary within the platform 700. The platform 700 has access to the subscriber information from the core network, which allows the network functions 704 to deliver data traffic in a manner that is optimised for radio conditions as indicated by the radio measurements. The data traffic may also be optimised according to the subscription of the user of the mobile terminal available radio resource, mobile terminal capability, and/or for the class of the terminal (e.g. access technologies used). This optimisation allows bandwidth usage to be balanced with customer experience. The subscriber information may include information about the price plan of the user of the mobile terminal. The mobile network operator may track the type of application used by the user, the total data usage of the user, and may differentially target radio resources the highest data value stream of users.

By hosting applications 740, 742 in the services part 706 of the platform the access node 800 (or at least the gateway 802), the point of the network that is aware of the application being used by the user of the mobile terminal closer in the link between the mobile terminal and the core network to the NodeB serving the mobile terminal. This enables the sharing of network resources to the most appropriate data streams, such as the most profitable data streams. Such awareness of the application to which a request for data transmission relates allows the use of low value data streams, such as peer-to-peer file sharing, to be allocated only limited bandwidth, so that remaining bandwidth can be targeted to particular users. In the uplink, transmission of data can be controlled by the access node 800 (or gateway 802) hosting the application to control data flow appropriately before data is onwardly transmitted towards the core of the network (which was not possible with conventional arrangements).

### Application Programming Interface (API)

As mentioned above, a novel API is provided which defines the language that each of the software modules 740, 742 of the platform 700 use to communicate to coordinate to optimise application delivery to users. The platform 700 negotiates which each application 740, 742 the specific resource and performance requirements based on the application characteristics, allowing the application to directly communicate the scheduling performance requirements, rather than using a predefined set of quality of service parameters. This negotiation between the platform 700 and the applications 740, 742 is facilitated by the API.

The API may also facilitate the provision of radio link quality information (e.g. from QoS function 732) to applications 740, 742.

The API may further enable the platform 700 to control use of the applications 740, 742 - e.g. to allow, disallow or adapt the applications.

By way of example, the application 740 may be a Voice over IP (VoIP) application. The nature of Voice over IP communications is that there is a virtually continuous succession of small data packets in which voice data is communicated. The voice data must be communicated with no or minimal latency in order that a two-way conversation can be performed successfully. The Voice over IP application 740 is able to compress voice data before transmission using a variety of techniques/CODECs. The compression techniques/CODECs may range from a relatively low compression technique, which provides high quality voice reproduction but requires a large bandwidth, to a much higher compression technique which provides reduced voice quality and which requires a much lower bandwidth.

The API is operable to provide details of the application characteristics to the network functions part 704 of the platform 700. This makes the network functions part 704 of the platform aware of the characteristics of the application. In the present example, as the application is a Voice over IP application, the network functions part 704 may be made aware that the application will tend to transmit continuous successions of small data packets that require transmission with no or low latency. The network function 704 may then be configured appropriately.

The API may further be operable to allow the network functions part 704 to communicate radio link quality information to the application 740. For example, when the network functions part 704 received information regarding the application characteristics (via the API), it may allocate radio link resources to that application 740. This allocation of radio link resources may be communicated by the network functions part 704 to the application 740 (via the API). The application 740 may then select an appropriate compression technique/CODEC in dependence upon the radio link quality available. During a Voice over IP call, the available radio link quality may be communicated regularly from the network functions part 704 to the application 740 (via the API) to allow the application 740 to vary the compression technique/CODEC used in accordance with changes to the radio link quality.

The network functions part 704 may control how the applications 740, 742 work (via the API). The network functions part 704 may allow, disallow or adapt the applications 740, 742 hosted in the services part 706 of the platform 700. For example, the network functions part 704 may require the Voice over IP application 740 to use a particular compression technique/CODEC if radio link bandwidth is restricted.

Another example of how the network functions part 704 may advantageously provide radio link quality information to an application (via the API) is when the application 742 is a gaming application used by several users. If the radio link quality information received by the application 742 indicates that bandwidth is restricted, the application 742 may adapt is communications to the users such that latency of the communications is increased uniformly for all of the users (so that they all experience the same delay), in order that each of the users is provided with the same gaming experience.

In the embodiments described, the devices that connect to the platforms 700 are mobile devices that connect to the platforms via the radio access network of a mobile/cellular telecommunications network. It should be appreciated that non-mobile (fixed) devices may be connected to the platforms 700, for example by a wired or cable connection.

### Allocation of Services

The control means is responsible for allocating the service instance for each UE, based on the UE locations and the control means capacity, capability and available resources to host another instance of a service.

For certain low popularity services or where the available serving control means capacity or capability is limited, the service can be hosted from a central control means, or from a neighbouring distributed control means.

For some services/functions, where the source and destination client applications are in the same geographical region, being served by the same site (e.g. BTS location) or site cluster (e.g. finite number of sites), the access node 800/gateway 802 ensures that the server for the service is located close to both users, and the traffic is routed between the users within the site.

### Edge Cloud

According to the invention, the resource capabilities (e.g. processing power and/or memory) of a plurality of the platforms 700 (control units) are accessible by a central controller 900. The controller 900 makes available a pool of the resources (which are derived from the resource capabilities of the platforms 700) to one or more resource consuming entities. Each resource consuming entity comprises a service provider and one or more end users of that service. The service provider may, for example, wish to make content (e.g. music) available on a website for purchase by end users (consumers). In the embodiment the website is hosted using resources from the pool of resources.

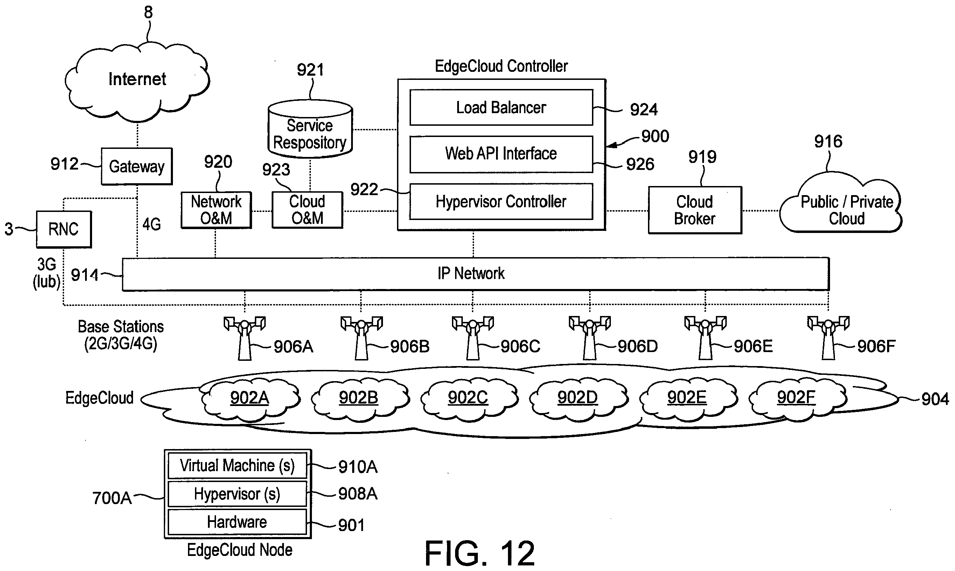

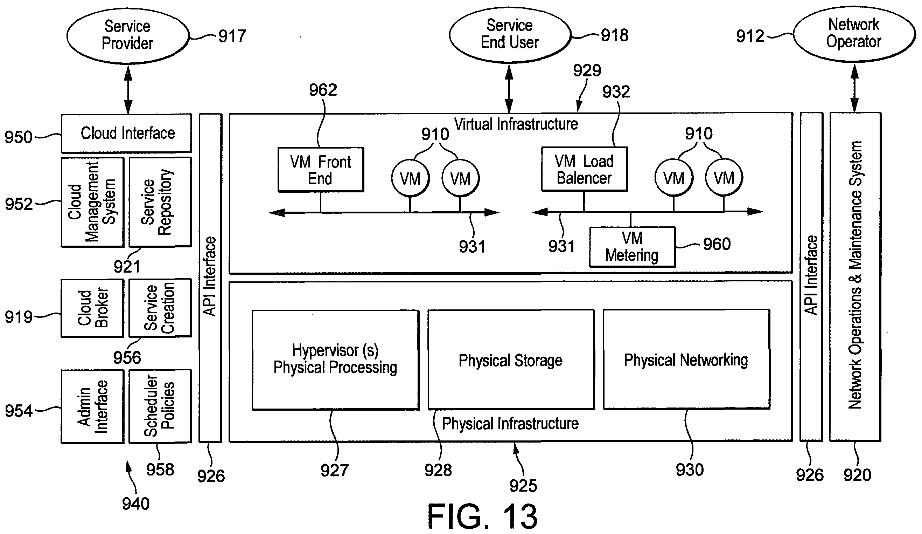

The system architecture of this embodiment is shown in Figure 12 and the functional architecture is shown in Figure 13.

As discussed above, and as shown in detail in Figure 5, each platform 700 includes three principal parts: soft nodes part 702 (physical/transport layer), network functions part 704 and services part 706 (application layer). The functions of the three parts 702, 704 and 706 are performed by hardware and system software 901 (Figure 12) of the platform 700 - for example, microprocessor(s), data storage capability and an operating system.

The platform 700 communicates with the radio frequency (RF) part of a base station (radio unit), such as a NodeB 1. The soft nodes 702 of the platform 700 comprise components such as a soft NodeB 708, soft BTS 710, soft eNodeB 711 and soft RNC 712 and soft SGSN/GGSN 714.

As also mentioned above, the network functions part 704 of the platform 700 includes modules for performing functions similar to those performed by the core network of a mobile telecommunications network, such as billing 720, location tracking 722 and the radio resource management (RRM) 724. The network functions parts 704 of the platform 700 provide an Application Programming Interface (API) framework to the services part 706 of the platform 700. The services part 706 of the platform supports a plurality of applications 740, 742 etc.

As shown in figure 6, a platform 700 may be provided at each base station of the mobile network (where it is connected to the radio frequency part (radio unit) of the base station - NodeB 1 in figure 2), forming an access node 800. Platform 700 may also be provided at the RNC (item 3 in figure 2) where it forms a gateway 802. The access node 800 and the gateway 802 are both configured to communicate directly with the network core 804 (for example, comprising the SGSN 5, GGSN 6 and VAS 7 (as shown in figure 2)). The access node 800 and gateway 802 may also be connected to the internet 8 for direct internet access via direct links 806 and 808 (Figure 6), respectively, such that at least a portion of the core network 804 is bypassed in the manner described above.

The resources capabilities of a platform 700 that are made available to the pool are in this embodiment hardware and system software resources 901 of the platform 700.

The hardware and systems software 901 that supports the soft nodes part 702 and network function part 704 of the platform will generally be designed so that it has ample resource capabilities to cope with peak demand. For example, hardware and systems software 901 that supports the soft nodes part 702 and the network functions part 704 may be specified so that 80% of its resource capabilities are expected to be used at the busiest peak time. For example, the busiest peak time for a platform 700 serving a base station at a commuter railway station will typically be the commuter "rush" hours. Outside the busiest peak time, the resources of the hardware and systems software 901 that supports the soft nodes part 702 and network function part 704 will generally be used at a much lower level, e.g. at 20% of its resource capabilities. The hardware and systems software 901 therefore has resource capabilities that are surplus to the requirements of the base stations with which it is associated. The resource capabilities of a platform 700 that are surplus to the requirements of the base stations with which the platform 700 is associated are referred to as "resource availabilities". The invention, advantageously, allows the spare resource capabilities ("resource availabilities") to be used for other purposes by means of the central controller 900.

The resource availabilities may be a significantly under-used resource. For example, in the UK there are over 15000 Vodafone (R) base stations. If a similar number of platforms 700 are provided, this represents considerable resource.

The spare resources ("resource availabilities") of platform 700A are shown schematically by platform cloud 902A. The spare resources ("resource availabilities") of other platforms (not shown) are indicated by platform clouds 902B-F. The pool of these resources is shown as single "edge" cloud 904. The RF part of the base station associated with each platform /platform cloud are indicated at 906A-F. The edge cloud 904 virtualises the resource availabilities of a multiplicity of platforms 700 and combines them under one single network cloud and providing a virtual single resource pool.

In order to support the resource pooling, the platform 700A (and all other platforms) are provided with a hypervisor 908A in its services part 706. The hypervisor 908A is a control program which creates a virtual machine 910A (also in the services part 706) to run appropriate software to enable interaction with the controller 900 and to create virtual instances in the resource pool of computing and storage resources using the underlying hardware and system software resources 901 of the platform 700A.

The controller 900 communicates with the virtual machine 910A initially to obtain details of the resource capabilities of the platform 700A. For example, the type of processor or processors and the type of operating system provided by the platform 700A. This resource capabilities data is stored in a resource database of the network operations and management system (O&M) 920 which is accessible by the controller 900. The controller 900 also communicates with the virtual machine 910A to determine the amount of resource capabilities surplus to the requirements of the base stations associated with the platform 700A availability at a particular time (i.e. the resource availabilities), and this is also stored in the resource database. The geographical location of each platform is additionally stored in the resource database. The resource capabilities and resource availabilities may be obtained periodically and updated in the resource database.

In the arrangement shown in Figure 12 the platform 700A is provided at a base station 906A at the network and forms an access node (like item 24 of Figure 2 and item 800 of Figure 6). In Figure 12 the network core is represented by gateway 912 which facilitates communication between the internet 8 and the RNC 3 (3G/UMTS) of the radio access part of the network or IP network 914 (4G/LTE). In this embodiment communications between the RNC 3 and the platform 700A associated with the base station 906A are Iub-based communications running NBAP protocol, and communications between the Gateway 912 and the platform 700A associated with the base station are IP-based communications and are transmitted via IP network 914.

"Cloud computing" is a known concept in which various users (often with very different requirements) are provided with services through a client application on their local data processing device (often through a web browser). The software and data required to provide the service are stored remotely on one or more servers. Requests for service from the user (consuming entity) are sent via the client application on their data processing device to the server or servers, which perform the relevant data processing, and then return the results to the user's data processing device. According to the principle of cloud computing, the location of the server or servers providing the service is not of any consequence to the user. The server providing data processing for the user may change from time to time and will have no or minimum impact on the user experience.

The resources of the servers available to provide data processing to clients may be considered as an internet-based "cloud" or datacentre. Such a cloud is shown at 916 in Figure 12.

The internet-based cloud 916 may provide services to specific users (such as a single corporation) and so may be a "private" cloud. Alternatively, the internet-based cloud 916 may provide the services to a multiplicity of users which have no particular relationship with one another - that is, a "public" cloud.

As discussed above, the embodiment provides an edge cloud 904 that provides a pool of resources of a plurality of platforms 700.

The controller 900 controls the provision of services by the edge cloud 904 in response to requests by resource consuming entities The network operator retains control of the resources via the O&M 920 and may override requests for resources from the controller 900. The network O&M system 920 forms part of the network core.

As mentioned above, each resource consuming entity may comprise a service provider 917 which makes a service available to one or more end users 918. The service provider 917 uses the resources of the edge cloud 904 to provide the service to the end users 918. The controller 900 controls and allocates resources to the service provider 917.

Optionally, as shown in Figure 12, a cloud broker 919 may connect the edge cloud 904 to the internet-based cloud 916 via the controller 900. A single service may be provided by using resources from both the edge cloud 904 and the Internet-based cloud 916 under supervision of the cloud broker 919.

As an alternative to service requests being received from a cloud broker 919, which manages the distribution of service requests between an internet cloud 916 (Figure 12) and the edge cloud 904, the edge cloud 904 may provide services in an environment where there is no internet cloud 916.

The controller 900 comprises a hypervisor controller 922 for communicating with the hypervisor 908 of each platform 700 (including the hypervisor 908A of each platform 700A). The controller 900 further comprises a load balancer 924 which load balances the multiple simultaneous requests received by the controller 900 from service end users 918.

The controller 900 maintains in a service repository database 921 a list of created services for each service provider 917, with appropriate details such as which virtual machines 910 on which platforms 700 currently host the service. Cloud operations and management (O&M) system 923 controls access to the edge cloud 904.

The controller 900 additionally comprises a web API interface 926 which provides a published, defined interface to the service end user 918 to allow communications between the controller 900 and the service end user 918 in a predetermined format. The web API interface 926 receives requests from the service end user 918 for resources required to meet data processing requests from clients.

The API interface also provides a published, defined interface between the cloud O&M system 923 and the controller 900/edge cloud 904, and a published, defined interface between the network O&M system 920 and the controller 900/edge cloud 904.

Figure 13 shows the functional architecture corresponding to the system architecture of Figure 12. The physical infrastructure 925 comprises the hardware and system software 901 of the platforms 700, including physical processing 927 for the hypervisor(s) 908, physical storage for data 928 and physical networking 930 for supporting the network functions part 704 of the platforms 700. The virtual infrastructure 929 comprises the virtual machine(s) 910 of each of the platforms 700 and the VM Load balancer 932. The VM load balancer 932 is linked to the virtual machines 910 by virtual machine enterprise bus 931. The VM Load balancer in 932 is part of hypervisor controller function 922 and balances the load across the virtual machines 910. The operation of the VM Load balancer in 932 is totally transparent to the service end user 918.

The functions performed by the cloud O&M system 923 are indicated generally at 940 in Figure 13, and these functions interact with the physical infrastructure 925 and the virtual infrastructure 929 via the API interface 926.

The functions 940 of the cloud O&M system 923 include cloud interface 950, cloud management system 952, administration interface 954, service creation 956, scheduler policies 958, as well as the functions of the cloud broker 919 and the service repository 921.

As shown in Figure 13, the network O&M system 920 communicates with the physical infrastructure 925 and the virtual infrastructure 929 via the API interface 926.

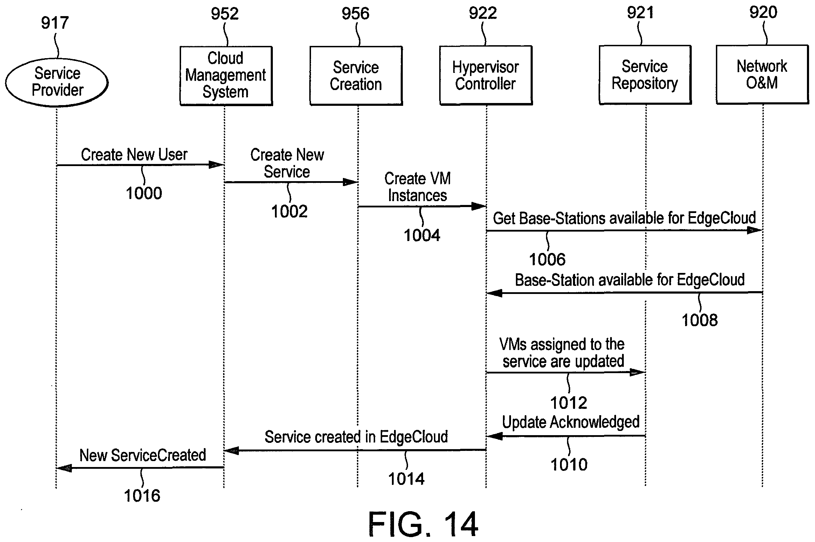

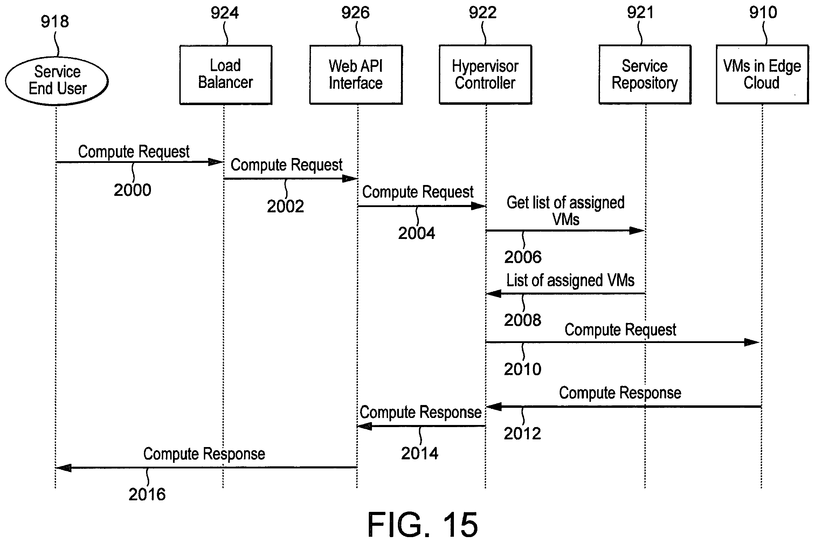

There are two main functions performed according to the embodiment in the invention: firstly, the creation of a service for a service provider using resources from the edge cloud 904, and, secondly, the provision of service to an end user (service consumption) by the service provider 917 (using resources from the edge cloud 904). These functions will now be described with particular reference to the flow charts of Figures 14 and 15.

Referring to Figure 14, a service provider 917 requests service creation by sending a "create new user" message 1000 to the cloud management system 952. The "create new user" message 1000 includes details of the service provider and the nature of the service desired to be created. For the sake of illustration only, an example of the service provided by the service provider 917 is a website which allows end users to search and download music and other content in a format selected by the end user. The nature of this service and the requirement for resources (storage capacity for the music and content, and processing power to perform encoding of the music and content into the desired format for the end user, for example) are included in the "create new user" message 1000. The "create new user" message 1000 also includes details of the identity of the service provider 917.

The "create new user" message 1000 is transmitted via the cloud interface 950 to the cloud management system 952. The cloud management system 952 analyses the "create new user" message 1000 and decides whether or not to allow the service provider 917 to host its services on the edge cloud 904. This process may include authenticating the service provider 917. The cloud management system 952 may evaluate the quantity and quality of resources required to host the service for the service provider 917, and may perform checks on the identity of the service provider 917, in order to determine whether the service provider 917 should be authenticated.

If the cloud management system 952 decides to host services for the service provider 917 on the edge cloud 904, the cloud management system 952 issues a "create new service" message 1002 and sends this to the service creation function 956. The service creation function 956 evaluates the resource requirements of the service provider (which are indicated in the "create new user" message 1000) and determines how these resources will be provided by virtual machines 910 forming the edge cloud 904. The service creation function 956 then calculates the virtual machine resources that will be required by the service provider and sends details thereof in a "create VM instances" message 1004, which message is transmitted to the hypervisor controller 922.

On receipt of the "create VM instances" message 1004 from the service creation function 956, the hypervisor controller 922 identifies platform(s) 700 that have resource availabilities that can provide the virtual machine instances required, for example, by consulting the resource database of resource availabilities.

The hypervisor controller 922 then communicates with the network O&M system 920 to determine which platforms 700 are available to provide the required virtual machine instances in the edge cloud 904 by sending a "get base-stations available for edge cloud" message 1006 to the network O&M function 920.

The network O&M function 920 confirms the availability of the selected platforms 700 in the edge cloud 904 and notifies this to the hypervisor controller 922 in the "base-station available for edge cloud" message 1008.

The hypervisor controller 922 then notes the virtual machines 910 of each platform 700 that are assigned to the service for the service provider 917 (within the edge cloud 904) and provides details of these virtual machines 910/platforms 700 to the service repository 921 in "VMs assigned to the service are updated" message 1010. In this way the service repository 921 is able to keep a record of on which platforms the services for each service provider 917 are hosted. The service repository 921 acknowledges receipt of the message 1010 by sending an "update acknowledged" 1012 message to the hypervisor controller 922.

The hypervisor controller 922 then confirms creation of the service in the edge cloud 904 to the cloud management system 952 by sending "service created in edge cloud" message 1014. The cloud management system 952 in turn confirms allocation of the necessary resources to host the service for the service provider 917 by sending to the service provider 917 a "new service created" message 1016.

The service provider 917 thus has confirmation that its services are hosted by the edge cloud 904 and is then able to allow service end users 918 that are registered with the service provider 917 to consume services provided by the service provider 917 but hosted by the edge cloud 904.

The consumption of a service provided by the service provider 917 by a service end user 918 will now be described with reference to the flow chart of Figure 15.

A service end user 918 that is registered with the service provider 917 makes a request for a service by issuing a "compute request" message 2000, which is received by the load balancer 924 via virtual machine front end 962 in the virtual infrastructure.

In the example that the service provider 917 provides a website making available music and other content to service end users 918 registered with the service provider 917, the service end user 918 on their personal data processing device, such as a PC or smart phone, using a web browser, accesses the website made available through the service provider 917. A request for access to the website is received in the "compute request" message 2000 by the load balancer 924. The load balancer 924 manages the load of simultaneous "compute request" messages received from service end user 918 and forwards them to the API interface in a load balanced fashion.

The load balancer 924 then transmits the "compute request" message 2002 to the API interface 926, which in turn passes the "compute request" message 2004 to the hypervisor controller 922.

The hypervisor controller 922 then consults the service repository 921 by sending "get list of assigned VMs" message 2006 to determine which virtual machines 910 are assigned to the service provider 917. In this example, the virtual machines 910 are assigned to the service provider 917 are virtual machines that host the content download website. The service repository 921 returns a list of assigned virtual machines 910 to the hypervisor controller 922 in a "list of assigned VMs" message 2008.

The hypervisor controller 922 then sends the request for service from the end user to appropriate virtual machine(s) of appropriate platform(s) 700 in a "compute request" message 2010 in order that the resources of the virtual machine(s) 910 can be used to provide the requested service (the music download website in this example). The relevant processing and data storage to provide the requested service is performed by the virtual machine 910 of the or each platform 700, using the hardware and system software 901 of the platform. When the necessary processing has been performed by the virtual machine(s) 910, the response to the service request is transmitted to the hypervisor controller 922 in "compute response" message 2012.

The hypervisor controller transmits the service response in a "compute response" message 2014 to the API interface 926, which in turn passes the service response in a "compute response" message 2016 to the service end user 918, thereby providing the service end user 918 with the requested service.

The consumption of resources by service end user 917 is noted by virtual machine metering function 960 in the virtual infrastructure 929 so that the service provider 917 may be charged according to the use made of resources in the edge cloud 904.

A service end user 918 may be a mobile terminal registered with the mobile telecommunications network. Such a request for service ("compute request" 2000) may be transmitted via the base station 906 with which that mobile terminal is registered, and may be communicated to the platform 700 associated with the base station 906. However, advantageously, the service request is not automatically implemented on the platform 700 associated with the base station 906 to which the mobile terminal is attached, but is instead passed to the controller 900 (for example via the IP network 914), and a decision as to which part of the edge cloud 904 provides the service is made by the hypervisor Controller 922. As indicated above, that decision may be based partly on the proximity of the requesting entity (in this example the mobile terminal) and the platform that will provide the service. Therefore, the platform 700 that provides the service may indeed be the platform associated with the base station 906 to which the mobile terminal is attached. However, this is not necessarily the case. For example, the local platform to the mobile terminal might not have sufficient spare capacity to promptly and efficiently meet the service request. Also, the local platform 700 may not have optimal resource capabilities (such as an appropriate operating system, microprocessor or storage capacity) to efficiently and promptly meet the service request. By consulting the Network O&M 920 for the resource capabilities and resource availability and the location of platforms 700, the hypervisor controller 922 is able to allocate the service request to the most appropriate platform 700 within the edge cloud 904.

The edge cloud 904 concept also allows services to be provided seamlessly as a mobile terminal moves geographically within the coverage area of the network such that the local platform 700 changes periodically. Initially, the platform 700 providing this service to the mobile terminal may indeed be the local platform. However, as a mobile terminal moves within the geographical coverage area of the mobile network, the local platform to the mobile terminal may change but the platform 700 providing the service may remain the same or may change according to a determination made by the hypervisor Controller 922 using information from the Network O&M 920. The transfer of a service between platforms may occur in accordance with the procedure described above under the heading "Relocation of Mobile Terminal". The service repository 921 is updated when the service is moved between platforms 700. Which platform 700 is providing resources is invisible to the service end user.

A service provider 917 may have particular requirements for the service requested. For example, the service provider 917 may require that the service request is met by platforms 700 within a particular geographical area (such as the United Kingdom or part thereof). The hypervisor controller 922 receives such requirements and allocates appropriate platforms 700 to meet these requirements.

In contrast to conventional internet-based clouds (such as 916), the edge cloud 904 is more secure. The edge cloud 904 can only be accessed via the controller 900 associated with the mobile telecommunications network. Further, the edge cloud 904 may provide services with greater reliability than the internet-based cloud 916. For example, the hypervisor controller 922 may monitor the operation of the platforms providing virtual machine instances for a particular service. If the hypervisor controller 922 becomes aware of a platform 700 becoming inoperable, the hypervisor may change the platform 700 providing the virtual machine instances for the service (and update the service repository 921 accordingly).

Generally, service provider 917 and the service end user 918 is unaware of which platform 700 is providing the resources to meet service requests - in accordance with the concept of the available resources of the various platform 700 being pulled into the edge cloud 904.

The hypervisor controller 922 may, however, take into account the location of the service end user 918 when deciding which platform or platforms 700 should provide the resources for meeting the service requirement. For example, a platform or platforms 700 in geographic proximity to the service requesting entity may be selected in order to reduce latency in communications between the platform 700 and the service end user. In this regard, it should be understood that, once a platform 700 has been selected to provide resources to a service end user 918, subsequent communications may bypass the controller 900, so that the communications between the service end user 918 and the platform 700 are transmitted locally.

Whether or not communications between the platform 700 and a service requesting entity 918 bypass the controller 900, such communications may be transmitted via the network core (e.g. 912, Figure 13; 804, Figure 6) or they may bypass the network core in the manner described above.

If the service end user 918 is a mobile terminal registered with the network, and its service requests are met by resources from the edge cloud 904, latency will be reduced compared to use of an internet based cloud like 916. If the edge cloud 904 provides services, communications to obtain the service may be kept within the network (and avoid the internet). As, generally, the network elements are in the same geographical region (typically within a single country), there is less delay than when communications are transmitted via the internet (which has elements in a multiplicity of countries).

There may be a geographical relationship between the service being provided and the platform. For example, the service may be the provision of images from a CCTV camera. The CCTV camera may be located at a base station associated with the platform 700 (or at the platform itself). The encoding of the CCTV images may be performed at the platform before the encoded images are transmitted to the edge cloud 904.

## Claims

1. A mobile telecommunications network including a core (912) and a radio access network having a plurality of radio units (906A-F) for wireless communication with mobile terminals registered with the mobile telecommunications network,
wherein the radio access network includes a plurality of control units (700A), each control unit (700A) being associated with one or more of the radio units (906A-F) for providing resource capabilities (901) for use by the radio units (906A-F), and wherein the mobile telecommunications network further includes a controller (900) coupled to the control units (700A) for accessing the resource capabilities (901) thereof and operable to make available to one or more resource consuming entities a pool of resources (904) which are derived from the resource capabilities (901) of the control units (700A),
**characterised in that**:
the controller (900) includes means operable to determine a portion of the resource capabilities (901) of each of the control units (700A) that is surplus to the requirements of the radio units (906A-F) associated therewith and for making that portion of the resource capabilities (901) available in the pool of resources (904),
the portion of the resource capabilities (901) made available in the pool of resources (904) allows the resource capabilities (901) to be used for purposes other than the requirements of the radio units (906A-F), and
each resource consuming entity comprises a service provider (917) and one or more end users (918) of that service, the service provider (917) hosting its services in the pool of resources (904) so that it is able to allow the service end users (918) to consume the services provided by the service provider (917) but hosted by the pool of resources (904).

2. The network of claim 1, wherein the controller (900) includes means operable to receive requests for resources from a plurality of the resource consuming entities and to allocate to each of the resource consuming entities a part of the resources available in the pool of resources (904).

3. The network of claim 1 or 2, wherein at least one of the service end users (918) is one of the mobile terminals registered with the mobile telecommunications network.

4. The network of claim 1, 2 or 3, wherein the controller (900) is operable to allocate to one of the service providers (917) a part of the resources available in the pool of resources (904) in dependence upon the location of at least one of the end users (918) of the service provided by the service provider (917) and the or each control unit (700A) providing said part of the resources in the pool (904).

5. The network of any one of claims 1 to 4, wherein the controller (900) is operable to allocate to one of the service providers (917) a part of the resources available in the pool of resources (904), which part comprises resource capabilities (901) of one or more of the control units (700A), and wherein the controller (900) is operable to change the ones of the control units (700A) which provide the part of the resources.

6. A method of operating a mobile telecommunications network including a core (912) and a radio access network having a plurality of radio units (906A-F) for wireless communication with mobile terminals registered with the mobile telecommunications network, wherein the radio access network includes a plurality of control units (700A), each control unit (700A) being associated with one or more of the radio units (906A-F) for providing resource capabilities (901) for use by the radio units (906A-F), and
wherein the mobile telecommunications network further includes a controller (900) coupled to the control units (700A), the method including operating the controller (900) to access the resource capabilities (901) of the control units (700A) and to make available to one or more resource consuming entities a pool of resources (904) which are derived from the resource capabilities (901) of the control units (700A),
**characterised in that**:
the controller (900) determines a portion of the resource capabilities (901) of each of the control units (700A) that is surplus to the requirements of the radio units (906A-F) associated therewith and makes that portion of the resource capabilities (901) available in the pool of resources (904),
the portion of the resource capabilities (901) made available in the pool of resources (904) allows the resource capabilities (901) to be used for purposes other than the requirements of the radio units (906A-F), and
each resource consuming entity comprises a service provider (917) and one or more end users (918) of that service, the service provider (917) hosting its services in the pool of resources (904) so that it is able to allow the service end users (918) to consume the services provided by the service provider (917) but hosted by the pool of resources (904)

7. The method of claim 6, wherein the controller (900) receives requests for resources from a plurality of the resource consuming entities and allocates to each of the resource consuming entities a part of the resources available in the pool of resources (904).

8. The method of claim 6 or 7, wherein at least one of the service end (918) users is one of the mobile terminals registered with the mobile telecommunications network.

9. The method of claim 6, 7 or 8, wherein the controller (900) allocates to one of the service providers (917) a part of the resources available in the pool of resources (904) in dependence upon the location of at least one of the end users (918) of the service provided by the service provider (917) and the or each control unit (700A) providing said part of the resources in the pool (904).

10. The method of any one of claims 6 to 9, wherein the controller (900) allocates to one of the service providers (917) a part of the resources available in the pool of resources (904), which part comprises resource capabilities (901) of one or more of the control units (700A), and wherein the controller (900) selectively changes the ones of the control units (700A) which provide the part of the resources.

## Patentansprüche

1. Ein mobiles Telekommunikationsnetzwerk, das einen Kern (912) und ein Funkzugriffsnetzwerk mit einer Vielzahl von Funkeinheiten (906A-F) zur drahtlosen Kommunikation mit mobilen Endgeräten, die in dem mobilen Telekommunikationsnetzwerk registriert sind, umfasst,
wobei das Funkzugriffsnetzwerk eine Vielzahl von Steuerungseinheiten (700A) umfasst, wobei jede Steuerungseinheit (700A) mit einer oder mehreren der Funkeinheiten (906A-F) assoziiert ist, zum Bereitstellen von Ressourcenfähigkeiten (901) zur Verwendung durch die Funkeinheiten (906A-F), und
wobei das mobile Telekommunikationsnetze ferner eine Steuerung (900) umfasst, die mit den Steuerungseinheiten (700A) zum Zugreifen auf Ressourcenfähigkeiten (901) von diesen gekoppelt ist und betriebsfähig ist, um einer oder mehreren ressourcenkonsumierenden Entitäten ein Pool von Ressourcen (904) verfügbar zu machen, die von den Ressourcenfähigkeiten (901) der Steuerungseinheiten (700A) abgeleitet werden,
**dadurch gekennzeichnet, dass**:
die Steuerung (900) Mittel umfasst, die betriebsfähig sind, um einen Teil der Ressourcenfähigkeiten (901) von jeder der Steuerungseinheiten (700A) zu bestimmen, der über die Anforderungen der damit assoziierten Funkeinheiten (906A-F) hinausgeht, und um diesen Teil der Ressourcenfähigkeiten (901) in dem Pool von Ressourcen (904) verfügbar zu machen,
der Teil der Ressourcenfähigkeiten (901), der in dem Pool von Ressourcen (904) verfügbar gemacht wird, erlaubt, dass die Ressourcenfähigkeiten (901) für Zwecke verwendet werden, die sich von den Anforderungen der Funkeinheiten (906A-F) unterscheiden, und
jede ressourcenkonsumierende Entität einen Dienstanbieter (917) und einen oder mehrere Endbenutzer (918) dieses Dienstes beinhaltet, wobei der Dienstanbieter (917) seine Dienste in dem Pool von Ressourcen (904) hostet, sodass dieses fähig ist, den Dienstendbenutzern (918) zu erlauben, die von dem Dienstanbieter (917) bereitgestellten, aber von dem Pool von Ressourcen (904) gehosteten Dienste zu konsumieren.

2. Netzwerk gemäß Anspruch 1, wobei die Steuerung (900) Mittel umfasst, die betriebsfähig sind, um Anfragen für Ressourcen von einer Vielzahl der ressourcenkonsumierenden Entitäten zu empfangen und um jeder der ressourcenkonsumierenden Entitäten einen Teil der Ressourcen, die in dem Pool von Ressourcen (904) verfügbar sind, zuzuweisen.

3. Netzwerk gemäß Anspruch 1 oder 2, wobei mindestens einer der Dienstendbenutzer (918) eines der mobilen Endgeräte ist, das in dem mobilen Telekommunikationsnetzwerk registriert ist.

4. Netzwerk gemäß Anspruch 1, 2 oder 3, wobei die Steuerung (900) betriebsfähig ist, um einem der Dienstanbieter (917) einen Teil der Ressourcen, die in dem Pool von Ressourcen (904) verfügbar sind, zuzuweisen, in Abhängigkeit von dem Standort von mindestens einem der Endbenutzer (918) des Dienstes, der von dem Dienstanbieter (917) bereitgestellt wird, und der oder jeder Steuerungseinheit (700A), die den Teil der Ressourcen in dem Pool (904) bereitstellt.

5. Netzwerk gemäß einem der Ansprüche 1 bis 4, wobei die Steuerung (900) betriebsfähig ist, um einem der Dienstanbieter (917) einen Teil der Ressourcen, die in dem Pool von Ressourcen (904) verfügbar sind, zuzuweisen, wobei dieser Teil Ressourcenfähigkeiten (901) von einer oder mehreren der Steuerungseinheiten (700A) beinhaltet, und wobei die Steuerung (900) betriebsfähig ist, um jene Steuerungseinheiten (700A) zu ändern, die den Teil der Ressourcen bereitstellen.

6. Ein Verfahren zum Betreiben eines mobilen Telekommunikationsnetzwerks, das einen Kern (912) und ein Funkzugriffsnetzwerk mit einer Vielzahl von Funkeinheiten (906A-F) zur drahtlosen Kommunikation mit mobilen Endgeräten, die in dem mobilen Telekommunikationsnetzwerk registriert sind, umfasst, wobei das Funkzugriffsnetzwerk eine Vielzahl von Steuerungseinheiten (700A) umfasst, wobei jede Steuerungseinheit (700A) mit einer oder mehreren der Funkeinheiten (906A-F) assoziiert ist, zum Bereitstellen von Ressourcenfähigkeiten (901) zur Verwendung durch die Funkeinheiten (906A-F), und
wobei das mobile Telekommunikationsnetzwerk ferner eine Steuerung (900) umfasst, die mit den Steuerungseinheiten (700A) gekoppelt ist, wobei das Verfahren das Betreiben der Steuerung (900) umfasst, um auf die Ressourcenfähigkeiten (901) der Steuerungseinheiten (700A) zuzugreifen und um einer oder mehreren ressourcenkonsumierenden Entitäten ein Pool von Ressourcen (904) verfügbar zu machen, die von den Ressourcenfähigkeiten (901) der Steuerungseinheiten (700A) abgeleitet werden,
**dadurch gekennzeichnet, dass**:
die Steuerung (900) einen Teil der Ressourcenfähigkeiten (901) von jeder der Steuerungseinheiten (700A) bestimmt, der über die Anforderungen der damit assoziierten Funkeinheiten (906A-F) hinausgeht, und diesen Teil der Ressourcenfähigkeiten (901) in dem Pool von Ressourcen (904) verfügbar macht,
der Teil der Ressourcenfähigkeiten (901), der in dem Pool von Ressourcen (904) verfügbar gemacht wird, erlaubt, dass die Ressourcenfähigkeiten (901) für Zwecke verwendet werden, die sich von den Anforderungen der Funkeinheiten (906A-F) unterscheiden, und
jede ressourcenkonsumierende Entität einen Dienstanbieter (917) und einen oder mehrere Endbenutzer (918) dieses Dienstes beinhaltet, wobei der Dienstanbieter (917) seine Dienste in dem Pool von Ressourcen (904) hostet, sodass dieses fähig ist, den Dienstendbenutzern (918) zu erlauben, die von dem Dienstanbieter (917) bereitgestellten, aber von dem Pool von Ressourcen (904) gehosteten Dienste zu konsumieren.

7. Verfahren gemäß Anspruch 6, wobei die Steuerung (900) Anfragen für Ressourcen von einer Vielzahl der ressourcenkonsumierenden Entitäten empfängt und jeder der ressourcenkonsumierenden Entitäten einen Teil der Ressourcen, die in dem Pool von Ressourcen (904) verfügbar sind, zuweist.

8. Verfahren gemäß Anspruch 6 oder 7, wobei mindestens einer der Dienstendbenutzer (918) eines der mobilen Endgeräte ist, das in dem mobilen Telekommunikationsnetzwerk registriert ist.

9. Verfahren gemäß Anspruch 6, 7 oder 8, wobei die Steuerung (900) einem der Dienstanbieter (917) einen Teil der Ressourcen, die in dem Pool von Ressourcen (904) verfügbar sind, zuweist, in Abhängigkeit von dem Standort von mindestens einem der Endbenutzer (918) des Dienstes, der von dem Dienstanbieter (917) bereitgestellt wird, und der oder jeder Steuerungseinheit (700A), die den Teil der Ressourcen in dem Pool (904) bereitstellt.

10. Verfahren gemäß einem der Ansprüche 6 bis 9, wobei die Steuerung (900) einem der Dienstanbieter (917) einen Teil der Ressourcen, die in dem Pool von Ressourcen (904) verfügbar sind, zuweist, wobei dieser Teil Ressourcenfähigkeiten (901) von einer oder mehreren der Steuerungseinheiten (700A) beinhaltet, und wobei die Steuerung (900) jene Steuerungseinheiten (700A) selektiv ändert, die den Teil der Ressourcen bereitstellen.

## Revendications

1. Un réseau de télécommunication mobile comprenant un noyau (912) et un réseau d'accès radio possédant une pluralité d'unités radio (906A-F) destinées à une communication sans fil avec des terminaux mobiles enregistrés auprès du réseau de télécommunication mobile,
où le réseau d'accès radio comprend une pluralité d'unités de commande (700A), chaque unité de commande (700A) étant associée à une ou plusieurs des unités radio (906A-F) de façon à fournir des capacités de ressource (901) destinées à une utilisation par les unités radio (906A-F), et
où le réseau de télécommunication mobile comprend en outre un dispositif de commande (900) couplé aux unités de commande (700A) de façon à accéder aux capacités de ressource (901) de celles-ci et conçu de façon à rendre disponible à une ou plusieurs entités consommatrices de ressources un groupement de ressources (904) qui sont dérivées des capacités de ressource (901) des unités de commande (700A),
**caractérisé en ce que** :
le dispositif de commande (900) comprend un moyen conçu de façon à déterminer une partie des capacités de ressource (901) de chacune des unités de commande (700A) qui est complémentaire aux exigences des unités radio (906A-F) associées à celui-ci et à rendre cette partie des capacités de ressource (901) disponible au groupement de ressources (904),
la partie des capacités de ressource (901) rendue disponible au groupement de ressources (904) permet aux capacités de ressource (901) d'être utilisées à des fins autres que les exigences des unités radio (906A-F), et
chaque entité consommatrice de ressources comprend un fournisseur de services (917) et un ou plusieurs utilisateurs finaux (918) de ces services, le fournisseur de services (917) hébergeant ses services dans le groupement de ressources (904) de sorte qu'il soit apte à permettre aux utilisateurs finaux des services (918) de consommer les services fournis par le fournisseur de services (917) mais hébergés par le groupement de ressources (904).

2. Le réseau selon la Revendication 1, où le dispositif de commande (900) comprend un moyen conçu de façon à recevoir des demandes relatives à des ressources à partir d'une pluralité des entités consommatrices de ressources et à attribuer à chacune des entités consommatrices de ressources une partie des ressources disponibles dans le groupement de ressources (904).

3. Le réseau selon la Revendication 1 ou 2, où au moins un des utilisateurs finaux des services (918) est un des terminaux mobiles enregistrés auprès du réseau de télécommunication mobile.

4. Le réseau selon la Revendication 1, 2 ou 3, où le dispositif de commande (900) est conçu de façon à attribuer à un des fournisseurs de services (917) une partie des ressources disponibles dans le groupement de ressources (904) en fonction de la localisation d'au moins un des utilisateurs finaux (918) des services fournis par le fournisseur de services (917) et de la ou chaque unité de commande (700A) fournissant ladite partie des ressources dans le groupement (904).

5. Le réseau selon l'une quelconque des Revendications 1 à 4, où le dispositif de commande (900) est conçu de façon à attribuer à un des fournisseurs de services (917) une partie des ressources disponibles dans le groupement de ressources (904), ladite partie comprenant des capacités de ressource (901) d'une ou de plusieurs des unités de commande (700A), et où le dispositif de commande (900) est conçu de façon à modifier les unités parmi les unités de commande (700A) qui fournissent la partie des ressources.

6. Un procédé d'actionnement d'un réseau de télécommunication mobile comprenant un noyau (912) et un réseau d'accès radio possédant une pluralité d'unités radio (906A-F) destinées à une communication sans fil avec des terminaux mobiles enregistrés auprès du réseau de télécommunication mobile, où le réseau d'accès radio comprend une pluralité d'unités de commande (700A), chaque unité de commande (700A) étant associée à une ou plusieurs des unités radio (906A-F) de façon à fournir des capacités de ressource (901) destinées à une utilisation par les unités radio (906A-F), et
où le réseau de télécommunication mobile comprend en outre un dispositif de commande (900) couplé aux unités de commande (700A), le procédé comprenant l'actionnement du dispositif de commande (900) de façon à accéder aux capacités de ressource (901) des unités de commande (700A) et à rendre disponible à une ou plusieurs entités consommatrices de ressources un groupement de ressources (904) qui sont dérivées des capacités de ressource (901) des unités de commande (700A),
**caractérisé en ce que** :
le dispositif de commande (900) détermine une partie des capacités de ressource (901) de chacune des unités de commande (700A) qui est complémentaire aux exigences des unités radio (906A-F) associées à celui-ci et rend cette partie des capacités de ressource (901) disponible au groupement de ressources (904),
la partie des capacités de ressource (901) rendue disponible au groupement de ressources (904) permet aux capacités de ressource (901) d'être utilisées à des fins autres que les exigences des unités radio (906A-F), et
chaque entité consommatrice de ressources comprend un fournisseur de services (917) et un ou plusieurs utilisateurs finaux (918) de ces services, le fournisseur de services (917) hébergeant ses services dans le groupement de ressources (904) de sorte qu'il soit apte à permettre aux utilisateurs finaux des services (918) de consommer les services fournis par le fournisseur de services (917) mais hébergés par le groupement de ressources (904).

7. Le procédé selon la Revendication 6, où le dispositif de commande (900) reçoit des demandes relatives à ressources à partir d'une pluralité des entités consommatrices de ressources et attribue à chacune des entités consommatrices de ressources une partie des ressources disponibles dans le groupement de ressources (904).

8. Le procédé selon la Revendication 6 ou 7, où au moins un des utilisateurs finaux (918) des services est un des terminaux mobiles enregistrés auprès du réseau de télécommunication mobile.

9. Le procédé selon la Revendication 6, 7 ou 8, où le dispositif de commande (900) attribue à un des fournisseurs de services (917) une partie des ressources disponibles dans le groupement de ressources (904) en fonction de la localisation d'au moins un des utilisateurs finaux (918) des services fournis par le fournisseur de services (917) et de la ou chaque unité de commande (700A) fournissant ladite partie des ressources dans le groupement (904).

10. Le procédé selon l'une quelconque des Revendications 6 à 9, où le dispositif de commande (900) attribue à un des fournisseurs de services (917) une partie des ressources disponibles dans le groupement de ressources (904), ladite partie comprenant des capacités de ressource (901) d'une ou de plusieurs des unités de commande (700A), et où le dispositif de commande (900) modifie de manière sélective les unités parmi les unités de commande (700A) qui fournissent la partie des ressources.
